(19) Europäisches Patentamt
European Patent Office
Office européen des brevets

(11) **EP 2 806 639 A1**

(12) **EUROPEAN PATENT APPLICATION**
published in accordance with Art. 153(4) EPC

(43) Date of publication:
**26.11.2014 Bulletin 2014/48**

(51) Int Cl.:
***H04N 7/32*** (0000.00)

(21) Application number: **13738640.5**

(86) International application number:
**PCT/JP2013/050207**

(22) Date of filing: **09.01.2013**

(87) International publication number:
**WO 2013/108684 (25.07.2013 Gazette 2013/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.01.2012 JP 2012009128**

(71) Applicant: **Mitsubishi Electric Corporation
Tokyo 100-8310 (JP)**

(72) Inventors:
• **MINEZAWA, Akira
Tokyo 100-8310 (JP)**
• **SUGIMOTO, Kazuo
Tokyo 100-8310 (JP)**
• **MIYAZAWA, Kazuyuki
Tokyo 100-8310 (JP)**

• **ITANI, Yusuke
Tokyo 100-8310 (JP)**
• **HATTORI, Ryoji
Tokyo 100-8310 (JP)**
• **MORIYA, Yoshimi
Tokyo 100-8310 (JP)**
• **HIWASA, Norimichi
Tokyo 100-8310 (JP)**
• **SEKIGUCHI, Shunichi
Tokyo 100-8310 (JP)**
• **MURAKAMI, Tokumichi
Tokyo 100-8310 (JP)**

(74) Representative: **Pfenning, Meinig & Partner GbR
Patent- und Rechtsanwälte
Theresienhöhe 11a
80339 München (DE)**

(54) **VIDEO IMAGE DECODING DEVICE, VIDEO IMAGE AND CODING DEVICE, VIDEO IMAGE DECODING METHOD AND VIDEO IMAGE CODING METHOD**

(57) A loop filter unit 11 carries out a class classification of a local decoded image generated by an adding unit 9 into one class for each coding block having a largest size determined by an encoding controlling unit 2 and also designs a filter that compensates for a distortion piggybacked for each local decoded image belonging to each class, and also carries out a filtering process on the above-mentioned local decoded image by using the filter. A variable length encoding unit 13 encodes, as filter parameters, the filter designed by the loop filter unit 11 and used for the local decoded image belonging to each class, and a class number of each largest coding block.

FIG.1

EP 2 806 639 A1

**Description**

FIELD OF THE INVENTION

The present invention relates to a video encoding device for and a video encoding method of encoding a moving image with a high degree of efficiency, and a video decoding device for and a video decoding method of decoding an encoded moving image with a high degree of efficiency.

BACKGROUND OF THE INVENTION

Conventionally, in accordance with an international standard video encoding method, such as MPEG or ITU-T H.26x, after an inputted video frame is partitioned into macroblocks each of which consists of blocks of 16x16 pixels and a motion-compensated prediction is carried out on each of the macroblocks, information compression is carried out on the inputted video frame by carrying out orthogonal transformation and quantization on a prediction error signal on a per block basis. A problem is, however, that as the compression ratio becomes high, the compression efficiency is reduced because of degradation in the quality of a prediction reference image used when carrying out a motion-compensated prediction. To solve this problem, in accordance with an encoding method such as MPEG-4 AVC/H.264 (refer to nonpatent reference 1), by carrying out an in-loop blocking filtering process, a block distortion occurring in a prediction reference image and caused by quantization of orthogonal transformation coefficients is eliminated.

Particularly when carrying out a motion-compensated prediction between frames, a search for a motion vector is performed on each macroblock itself or each of subblocks into which each macroblock is further partitioned finely. Then, a motion-compensated prediction image is generated by carrying out a motion-compensated prediction on a reference image signal stored in a memory 107 by using the motion vector, and a prediction error signal is calculated by determining the difference between a prediction signal showing the motion-compensated prediction image and the image signal generated through the partitioning. Further, a predicting unit 102 outputs parameters for prediction signal generation which the predicting unit determines when acquiring the prediction signal to a variable length encoding unit 108. For example, the parameters for prediction signal generation includes an intra prediction mode indicating how a spatial prediction is carried out within a frame, and a motion vector indicating an amount of motion between frames.

When receiving the prediction error signal from the predicting unit 102, a compressing unit 103 removes a signal correlation by carrying out a DCT (discrete cosine transform) process on the prediction error signal, and then quantizes this prediction error signal to acquire compressed data. When receiving the compressed data from the compressing unit 103, a local decoding unit 104 calculates a prediction error signal corresponding to the prediction error signal outputted from the predicting unit 102 by inverse-quantizing the compressed data and then carrying out an inverse DCT process on the compressed data.

When receiving the prediction error signal from the local decoding unit 104, an adding unit 105 adds the prediction error signal and the prediction signal outputted from the predicting unit 102 to generate a local decoded image. A loop filter 106 eliminates a block distortion piggybacked onto a local decoded image signal showing the local decoded image generated by the adding unit 105, and stores the local decoded image signal from which the distortion is eliminated in a memory 107 as a reference image signal.

When receiving the compressed data from the compressing unit 103, a variable length encoding unit 108 entropy-encodes the compressed data and outputs a bitstream which is the encoded result. When outputting the bitstream, the variable length encoding unit 108 multiplexes the parameters for prediction signal generation outputted from the predicting unit 102 into the bitstream and outputs this bitstream.

In accordance with the encoding method disclosed by the nonpatent reference 1, the loop filter 106 determines a smoothing intensity for a neighboring pixel at a block boundary in DCT on the basis of information including the granularity of the quantization, the coding mode, the degree of variation in the motion vector, etc., thereby reducing distortions occurring at block boundaries. As a result, the quality of the reference image signal can be improved and the efficiency of the motion-compensated prediction in subsequent encoding processes can be improved.

In contrast, a problem with the encoding method disclosed by the nonpatent reference 1 is that the amount of high frequency components lost from the signal increases with increase in the compression rate, and this results in excessive smoothness in the entire screen and hence the video image becomes blurred. In order to solve this problem, the following patent reference 1 proposes a technique of applying a Wiener filter as the loop filter 106, and forming the loop filter 106 in such a way that a squared error distortion between an image signal to be encoded which is an original image signal and a reference image signal corresponding to this original image signal is minimized.

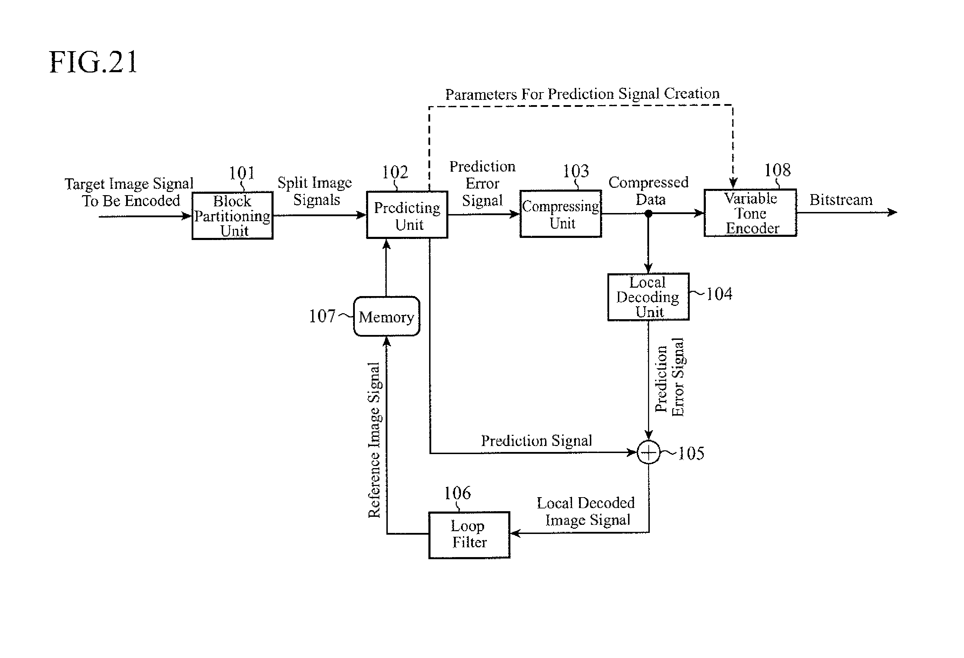

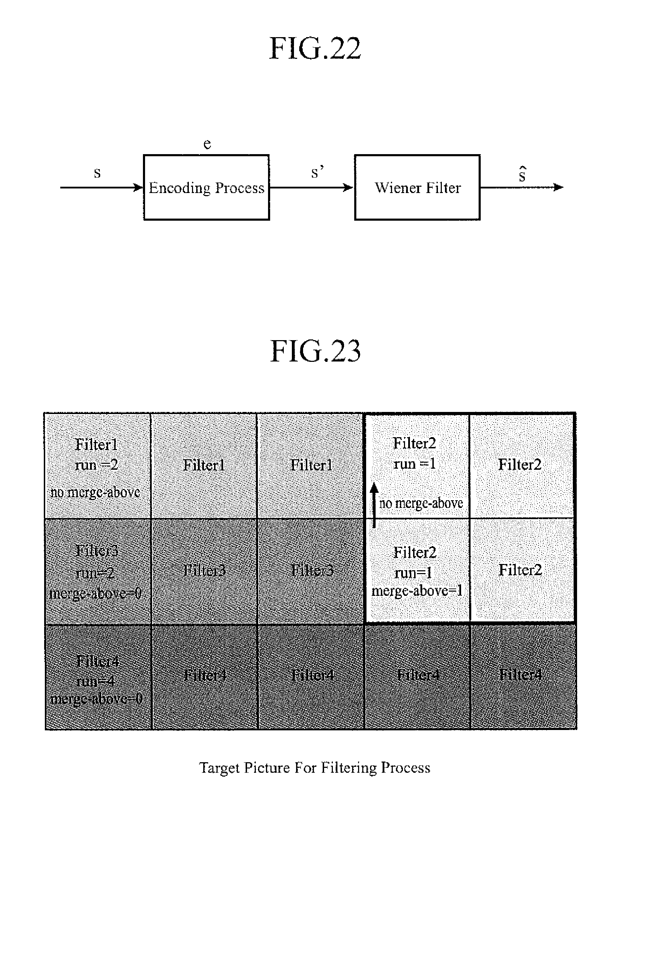

Fig. 22 is an explanatory drawing showing the principle behind an improvement of the quality of the reference image signal by using the Wiener filter in the image coding device disclosed by the patent reference 1. Referring to Fig. 22, a signal s corresponds to an image signal to be encoded which is inputted to a block partitioning unit 101 shown in Fig. 21, a signal s' is a local decoded image signal outputted from an adding unit 105 shown in Fig. 21 or a signal corresponding to a local decoded image signal in which distortions occurring at block boundaries are reduced by the loop filter 106 disclosed by the nonpatent reference 1. More specifically, the signal s' is the one in which a coding distortion (noise) e is piggybacked onto the signal s.

The Wiener filter is defined as a filter to be performed on the signal s' in such a way as to minimize this encoding distortion (noise) e within the limits of the squared error distortion. Generally, filter coefficients w can be determined from the autocorrelation matrix $R_{s's'}$ of the signal s' and the cross correlation vector $R_{ss'}$ of the signals s and s' according to the following equation (1). The magnitudes of the matrices $R_{s's'}$ and $R_{ss'}$ correspond to the number of taps of the filter determined.

$$w = R_{s's'}^{-1} R_{ss'} \qquad (1)$$

By applying the Wiener filter having the filter coefficients w, a signal s hat whose quality is improved ("^" attached to the alphabetical letter is expressed as hat because this patent application is filed by using the electronic filing system) is acquired as a signal corresponding to the reference image signal. According to the technique disclosed by the patent reference 1, a region classification (class classification) is carried out on each frame according to the motion information and the local signal characteristics of the image and an optimal Wiener filter is designed for each class so that high accuracy distortion compensation according to the locality of the image is implemented.

Related art document

Patent reference

Patent reference 1: WO 2008/010929

Nonpatent reference

Nonpatent reference 1: MPEG-4 AVC (ISO/IEC 14496-10)/H.ITU-T 264 standards

SUMMARY OF THE INVENTION

PROBLEMS TO BE SOLVED BY THE INVENTION

Because the conventional video encoding device is constructed as above, the high accuracy distortion compensation according to the locality of an image to be encoded can be implemented. A problem is, however, that because a class classification is carried out by using a method predetermined according to the motion information and the local signal characteristics of the image, the effect of the filtering process differs greatly depending upon the image to be encoded, and an image in which the distortion compensation effect caused by the filtering process is hardly exerted against distortions is generated.

The present invention is made in order to solve the above-mentioned problem, and it is therefore an object of the present invention to provide a video decoding device, a video encoding device, a video decoding method, and a video encoding method capable of improving the accuracy of improvement of image quality.

MEANS FOR SOLVING THE PROBLEM

In accordance with the present invention, there is provided a video decoding device in which a filter carries out a pixel adaptive offset process of performing a class classification of each pixel in a decoded image generated by a decoded image generator into one class for each coding block having a largest size by using a class classifying method, and adding an offset of each class to the pixel value of each pixel belonging to the above-mentioned class.

ADVANTAGES OF THE INVENTION

In accordance with the present invention, the filter carries out the pixel adaptive offset process of performing a class classification of each pixel in the decoded image generated by the decoded image generator into one class for each coding block having the largest size by using a class classifying method, and adding the offset of each class to the pixel value of each pixel belonging to the above-mentioned class. Therefore, there is provided an advantage of being able to improve the accuracy of improvement of image quality.

BRIEF DESCRIPTION OF THE FIGURES

[Fig. 1] Fig. 1 is a block diagram showing a video encoding device in accordance with Embodiment 1 of the present invention;

[Fig. 2] Fig. 2 is a flow chart showing processing (video encoding method) carried out by the video encoding device in accordance with Embodiment 1 of the present invention;

[Fig. 3] Fig. 3 is a block diagram showing a video decoding device in accordance with Embodiment 1 of the present invention;

[Fig. 4] Fig. 4 is a flow chart showing processing (video decoding method) carried out by the video decoding device in accordance with Embodiment 1 of the present invention;

[Fig. 5] Fig. 5 is an explanatory drawing showing an example in which each largest coding block is partitioned hierarchically into a plurality of coding blocks;

[Fig. 6] Fig. 6(a) is an explanatory drawing showing a distribution of coding blocks and prediction blocks after partitioning, and Fig. 6(b) is an explanatory drawing showing a state in which a coding mode $m(B_n)$ is assigned to each of the blocks through hierarchical layer partitioning;

[Fig. 7] Fig. 7 is an explanatory drawing showing an example of an intra prediction parameter (intra prediction mode) which can be selected for each prediction block $P_i^n$ in a coding block $B^n$,

[Fig. 8] Fig. 8 is an explanatory drawing showing an example of pixels which are used when generating a predicted value of each pixel in a prediction block $P_i^n$ in the case of $l_i^n=m_i^n=4$;

[Fig. 9] Fig. 9 is an explanatory drawing showing relative coordinates of each pixel in the prediction block $P_i^n$ which are determined with the pixel at the upper left corner of the prediction block $P_i^n$ being defined as the point of origin;

[Fig. 10] Fig. 10 is an explanatory drawing showing an example of a structure of using a plurality of loop filtering processes in a loop filter unit of the video encoding device in accordance with Embodiment 1 of the present invention;

[Fig. 11] Fig. 11 is an explanatory drawing showing an example of a class classification carried out on each largest coding block in an adaptive filtering process;

[Fig. 12] Fig. 12 is an explanatory drawing showing an example of the structure of using a plurality of loop filtering processes in the loop filter unit of the video encoding device in accordance with Embodiment 1 of the present invention;

[Fig. 13] Fig. 13 is a flow chart showing an example of a case in which the loop filter unit of the video encoding device in accordance with Embodiment 1 of the present invention carries out the adaptive filtering process;

[Fig. 14] Fig. 14 is a flow chart showing another example of the case in which the loop filter unit of the video encoding device in accordance with Embodiment 1 of the present invention carries out the adaptive filtering process;

[Fig. 15] Fig. 15 is an explanatory drawing showing an example of whether or not a filtering process is carried out on each coding block in the adaptive filtering process;

[Fig. 16] Fig. 16 is an explanatory drawing showing an encoding process using Move-To-Front of a class number which is carried out on each largest coding block in the adaptive filtering process;

[Fig. 17] Fig. 17 is an explanatory drawing showing another example of whether or not a filtering process is carried out on each coding block in the adaptive filtering process;

[Fig. 18] Fig. 18 is an explanatory drawing showing an example of a bitstream generated by a variable length encoding unit of the video encoding device in accordance with Embodiment 1 of the present invention;

[Fig. 19] Fig. 19 is a flow chart showing an example of a case in which a loop filter unit of the video decoding device in accordance with Embodiment 1 of the present invention carries out an adaptive filtering process;

[Fig. 20] Fig. 20 is an explanatory drawing showing a part of class classifying methods in a case of carrying out a pixel adaptive offset process;

[Fig. 21] Fig. 21 is a block diagram showing an image coding device disclosed by nonpatent reference 1;

[Fig. 22] Fig. 22 is an explanatory drawing showing the principle behind an improvement in the quality of a reference image signal using a Wiener filter; and

[Fig. 23] Fig. 23 is an explanatory drawing showing an example of encoding of an index of each largest coding block in an adaptive filtering process or a pixel adaptive offset process.

EMBODIMENTS OF THE INVENTION

Embodiment 1.

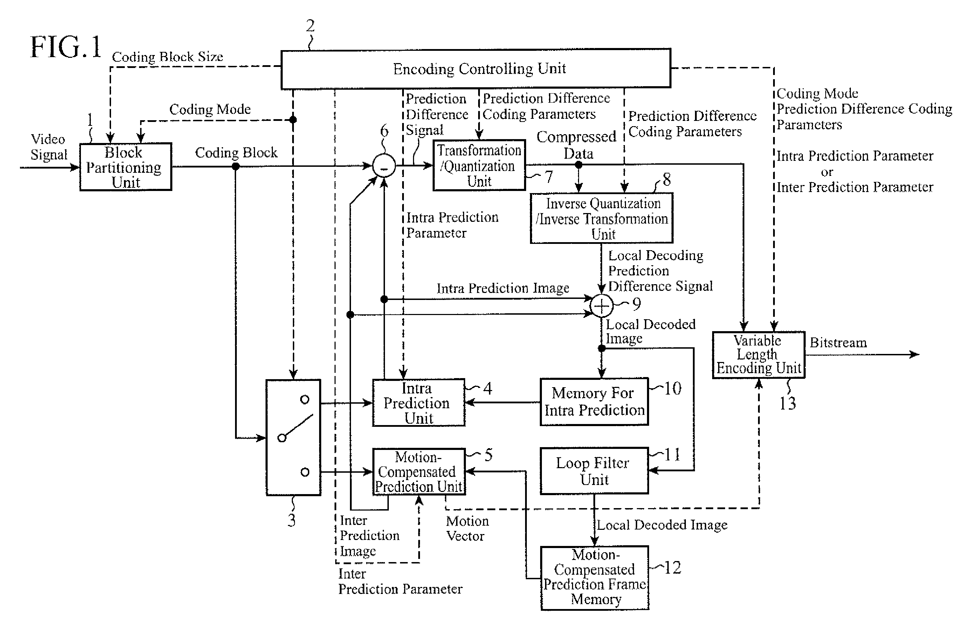

Fig. 1 is a block diagram showing a video encoding device in accordance with Embodiment 1 of the present invention. Referring to Fig. 1, a block partitioning unit 1 carries out a process of, when receiving a video signal as an inputted image, partitioning the inputted image into largest coding blocks which are coding blocks each having a largest size determined by an encoding controlling unit 2, and also partitioning each of the largest coding blocks into blocks hierarchically until the number of hierarchical layers reaches an upper limit on the number of hierarchical layers, the upper limit being determined by the encoding controlling unit 2. More specifically, the block partitioning unit 1 carries out a process of partitioning the inputted image into coding blocks according to partition determined by the encoding controlling unit 2, and outputting each of the coding blocks. Each of the coding blocks is further partitioned into one or more prediction blocks each of which is a prediction unit. The block partitioning unit 1 constructs a block partitioner.

The encoding controlling unit 2 carries out a process of determining the largest size of each of the coding blocks which is a unit to be processed at a time when a prediction process s carried out, and also determining the upper limit on the number of hierarchical layers at the time that each of the coding blocks having the largest size is hierarchically partitioned into blocks to determine the size of each of the coding blocks. The encoding controlling unit 2 also carries out a process of selecting a coding mode which is applied to each coding block outputted from the block partitioning unit 1 from one or more available coding modes (one or more intra coding modes in which the size or the like of each prediction block which is a unit for prediction process differs and one or more inter coding modes in which the size or the like of each prediction block differs). As an example of the method of selecting a coding mode, there is a method of selecting a coding mode which provides the highest degree of coding efficiency for each coding block outputted from the block partitioning unit 1 from the one or more available coding modes.

The encoding controlling unit 2 also carries out a process of, when the coding mode having the highest degree of coding efficiency is an intra coding mode, determining an intra prediction parameter which is used when carrying out an intra prediction process on the coding block in the intra coding mode for each prediction block which is a prediction unit shown by the above-mentioned intra coding mode, and, when the coding mode having the highest degree of coding efficiency is an inter coding mode, determining an inter prediction parameter which is used when carrying out an inter prediction process on the coding block in the inter coding mode for each prediction block which is a prediction unit shown by the above-mentioned inter coding mode. The encoding controlling unit 2 further carries out a process of determining prediction difference coding parameters which the encoding controlling unit provides for a transformation/quantization unit 7 and an inverse quantization/inverse transformation unit 8. Orthogonal transformation block partitioning information showing information about partitioning into orthogonal transformation blocks which are units for orthogonal transformation process on the coding block and a quantization parameter defining a quantization step size at the time of carrying out quantization on transform coefficients are included in the prediction difference coding parameters. The encoding controlling unit 2 constructs an encoding controller.

A select switch 3 carries out a process of, when the coding mode determined by the encoding controlling unit 2 is an intra coding mode, outputting the coding block outputted from the block partitioning unit 1 to an intra prediction unit 4, and, when the coding mode determined by the encoding controlling unit 2 is an inter coding mode, outputting the coding block outputted from the block partitioning unit 1 to a motion-compensated prediction unit 5.

The intra prediction unit 4 carries out a process of, when an intra coding mode is selected by the encoding controlling unit 2 as the coding mode corresponding to the coding block outputted from the select switch 3, performing an intra prediction process (intra-frame prediction process) on each prediction block, which is a unit for prediction process at the time of carrying out the prediction process on the coding block, by using the intra prediction parameter determined by the encoding controlling unit 2 while referring to a local decoded image stored in a memory 10 for intra prediction to generate an intra prediction image. An intra predictor is comprised of the intra prediction unit 4 and the memory 10 for intra prediction.

The motion-compensated prediction unit 5 carries out a process of, when an inter coding mode is selected by the encoding controlling unit 2 as the coding mode corresponding to the coding block outputted from the select switch 3, comparing the coding block with one or more frames of local decoded image stored in a motion-compensated prediction frame memory 12 for each prediction block which is a unit for prediction process to search for a motion vector, and performing an inter prediction process (motion-compensated prediction process) on each prediction block in the coding block by using the motion vector and the inter prediction parameter, such as a frame number which is determined by the encoding controlling unit 2 and which is referred to, to generate an inter prediction image. A motion-compensated predictor is comprised of the motion-compensated prediction unit 5 and the motion-compensated prediction frame memory 12.

A subtracting unit 6 carries out a process of subtracting the intra prediction image generated by the intra prediction unit 4 or the inter prediction image generated by the motion-compensated prediction unit 5 from the coding block outputted from the block partitioning unit 1, and outputting a prediction difference signal showing a difference image which is the result of the subtraction to the transformation/quantization unit 7. The transformation/quantization unit 7 carries out a process of performing an orthogonal transformation process (e.g., a DCT

(discrete cosine transform), a DST (discrete sine transform), or an orthogonal transformation process, such as a KL transform, in which bases are designed for a specific learning sequence in advance) on each orthogonal transformation block of the prediction difference signal outputted from the subtracting unit 6 by referring to the orthogonal transformation block partitioning information included in the prediction difference coding parameters determined by the encoding controlling unit 2 to calculate transform coefficients, and also quantizing the transform coefficients of each orthogonal transformation block by referring to the quantization parameter included in the prediction difference coding parameters and then outputting compressed data which are the transform coefficients quantized thereby to the inverse quantization/inverse transformation unit 8 and a variable length encoding unit 13. The transformation/quantization unit 7 constructs an image compressor.

The inverse quantization/inverse transformation unit 8 carries out a process of inverse-quantizing the compressed data about each orthogonal transformation block outputted from the transformation/quantization unit 7 by referring to the quantization parameter and the orthogonal transformation block partitioning information included in the prediction difference coding parameters determined by the encoding controlling unit 2, and also performing an inverse orthogonal transformation process on the transform coefficients which are the compressed data inverse-quantized thereby to calculate a local decoded prediction difference signal corresponding to the prediction difference signal outputted from the subtracting unit 6. An adding unit 9 carries out a process of adding the local decoded prediction difference signal calculated by the inverse quantization/inverse transformation unit 8 and the intra prediction image generated by the intra prediction unit 4 or the inter prediction image generated by the motion-compensated prediction unit 5 to calculate a local decoded image corresponding to the coding block outputted from the block partitioning unit 1. A decoded image generator is comprised of the inverse quantization/inverse transformation unit 8 and the adding unit 9. The memory 10 for intra prediction is a recording medium for storing the local decoded image calculated by the adding unit 9.

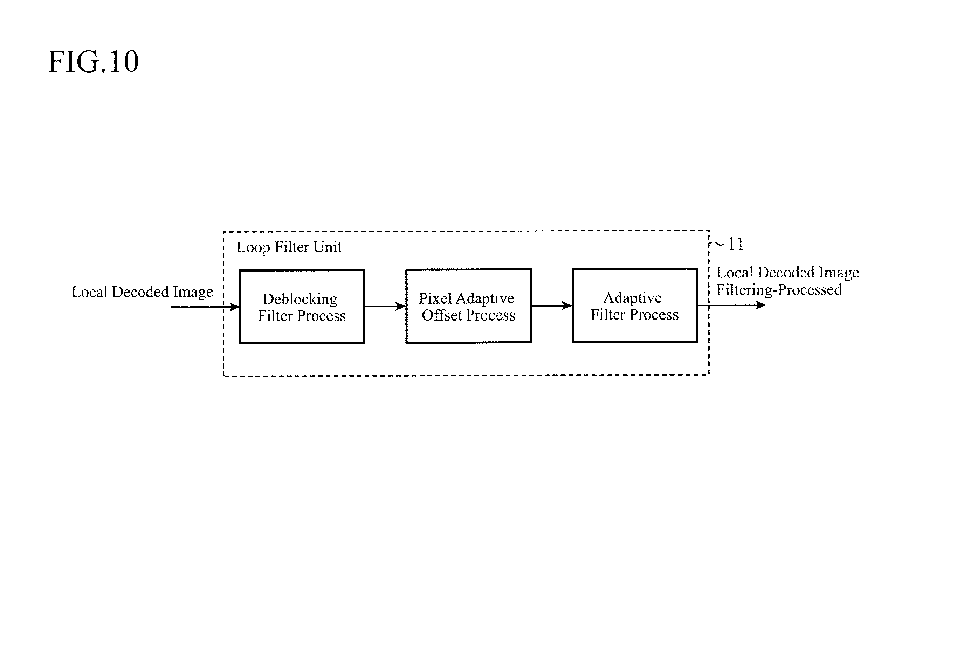

A loop filter unit 11 carries out a process of performing a predetermined filtering process on the local decoded image calculated by the adding unit 9 to output the local decoded image filtering-processed thereby. Concretely, the loop filter unit performs a filtering (deblocking filtering) process of reducing a distortion occurring at a boundary between orthogonal transformation blocks and a distortion occurring at a boundary between prediction blocks, a process (pixel adaptive offset process) of adaptively adding an offset on a per pixel basis, an adaptive filtering process of adaptively switching among linear filters, such as Wiener filters, to perform the filtering process, and so on. The loop filter unit 11 can be constructed in such a way as to perform one of the above-mentioned deblocking filtering process, the above-mentioned pixel adaptive offset process, and the above-mentioned adaptive filtering process, or perform two or more of the processes, as shown in Fig. 10. In general, while the image quality improves with increase in the number of types of filtering processes used, the processing load is increased with increase in the number of types of filtering processes used. More specifically, because there is a trade-off between the image quality and the processing load, the structure of the loop filter unit should just be determined according to the processing load acceptable in the video encoding device. The loop filter unit 11 constructs a filter.

In the pixel adaptive offset process, a case of not carrying out the offset process is defined as one class classifying method for each largest coding block first, and one class classifying method is selected from among a plurality of class classifying methods which are prepared in advance. Next, by using the selected class classifying method, each pixel included in the block is classified into one of classes, and an offset minimizing the sum of squared errors of brightness values between the image to be encoded and the local decoded image is calculated for each of the classes. Finally, the process of adding the offset to the brightness value of the local decoded image is carried out, thereby improving the image quality of the local decoded image. Therefore, in the pixel adaptive offset process, an index indicating the class classifying method for each largest coding block and the offset provided for each of the classes of each largest coding block are outputted to the variable length encoding unit 13 as a part of filter parameters.

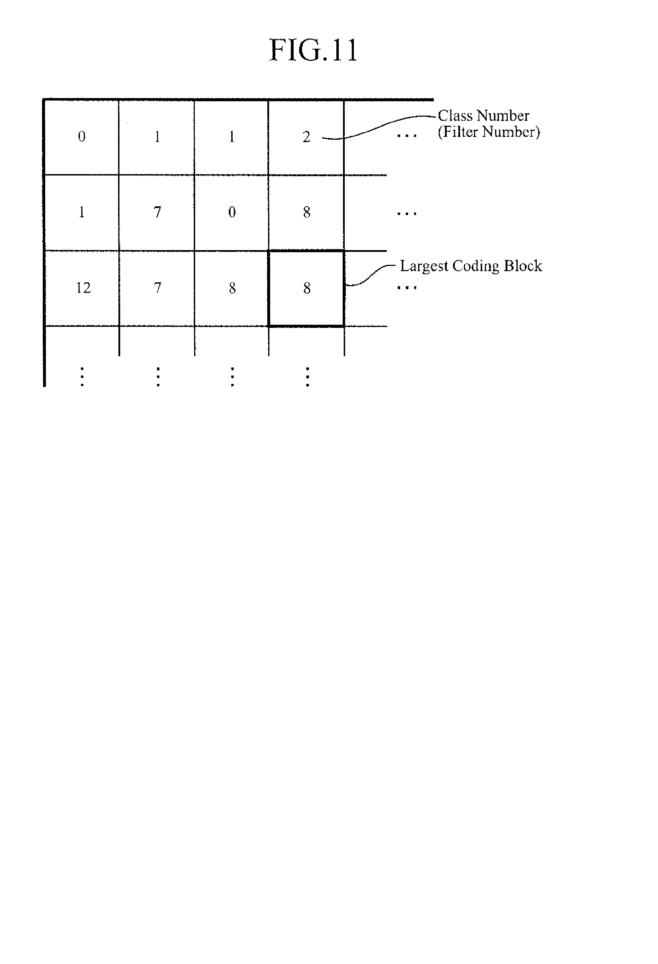

Further, in the adaptive filtering process, as shown in Fig. 11, a class classification (group classification) is carried out with a case of not carrying out the filtering process being included for each largest coding block (in the example shown in Fig. 11, a class number 0 shows "no filtering process"), a filter for compensating for a distortion piggybacked is designed for each region (local decoded image) belonging to each class (group), and the filtering process is carried out on the local decoded image by using the filter. Then, the number of above-mentioned classes (groups) (the number of filters), the filter for the local decoded image belonging to each class (group), and the class number (filter number) which is identification information about the identification of the class (group) of each largest coding block are outputted to the variable length encoding unit 13 as a part of the filter parameters. Because it is necessary to refer to the video signal by using the loop filter unit 11 when carrying out the pixel adaptive offset process and the adaptive filtering process, the video encoding device shown in Fig. 1 is modified in such a way that the video signal is inputted to the loop filter unit 11.

Further, as the method of using both the pixel adaptive offset process and the adaptive filtering process, instead of using the structure shown in Fig. 10, either the pixel adaptive offset process or the adaptive filtering process can be selected optimally for each largest coding block. In the case in which the video encoding device is constructed this way, a high-accuracy filtering process can be implemented while reducing the amount of computations of the filtering process on each largest coding block. However, in the case in which the video encoding device is constructed this way, selection information indicating which one of the pixel adaptive offset process on each largest coding block and the adaptive filtering process on each largest coding block is to be carried out is outputted to the variable length encoding unit 13 as a part of the filter parameters.

The motion-compensated prediction frame memory 12 is a recording medium for storing the local decoded image on which the filtering process is performed by the loop filter unit 11. The variable length encoding unit 13 carries out a process of variable-length-encoding the compressed data outputted thereto from the transformation/quantization unit 7, the output signal of the encoding controlling unit 2 (the block partitioning information about the partition within each largest coding block, the coding mode, the prediction difference coding parameters, and the intra prediction parameter or the inter prediction parameter), the motion vector outputted from the motion-compensated prediction unit 5 (when the coding mode is an inter coding mode), and the filter parameters outputted from the loop filter unit 11 to generate a bitstream. The variable length encoding unit 13 constructs a variable length encoder.

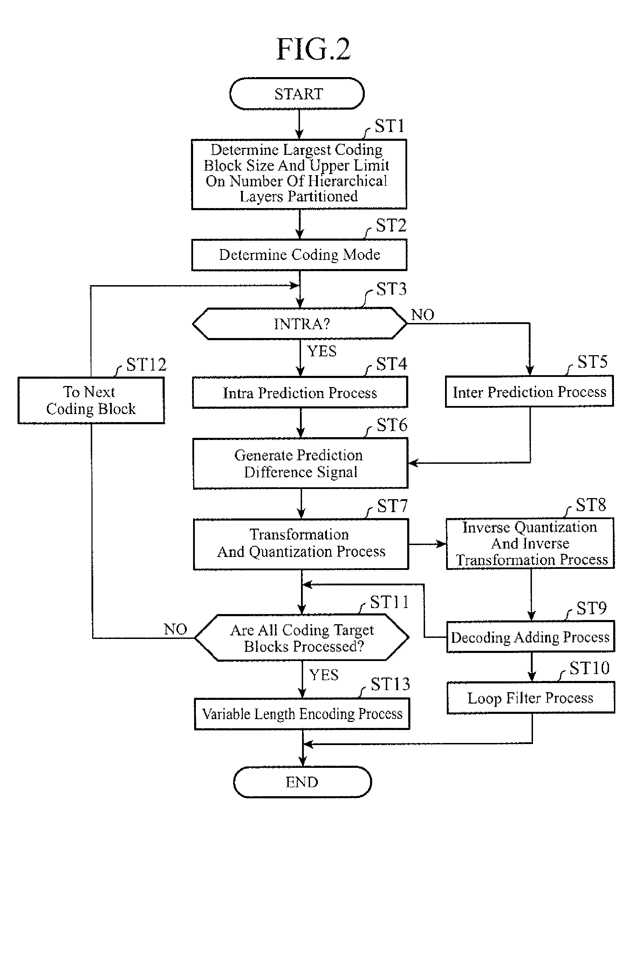

In the example shown in Fig. 1, the block partitioning unit 1, the encoding controlling unit 2, the select switch 3, the intra prediction unit 4, the motion-compensated prediction unit 5, the subtracting unit 6, the transformation/quantization unit 7, the inverse quantization/inverse transformation unit 8, the adding unit 9, the memory 10 for intra prediction, the loop filter unit 11, the motion-compensated prediction frame memory 12, and the variable length encoding unit 13, which are the components of the video encoding device, can consist of pieces of hardware for exclusive use (e.g., semiconductor integrated circuits in each of which a CPU is mounted, one chip microcomputers, or the like), respectively. As an alternative, the video encoding device can consist of a computer, and a program in which the processes carried out by the block partitioning unit 1, the encoding controlling unit 2 , the select switch 3, the intra prediction unit 4, the motion-compensated prediction unit 5, the subtracting unit 6, the transformation/quantization unit 7, the inverse quantization/inverse transformation unit 8, the adding unit 9, the loop filter unit 11, and the variable length encoding unit 13 are described can be stored in a memory of the computer and the CPU of the computer can be made to execute the program stored in the memory. Fig. 2 is a flow chart showing the processing (video encoding method) carried out by the video encoding device in accordance with Embodiment 1 of the present invention.

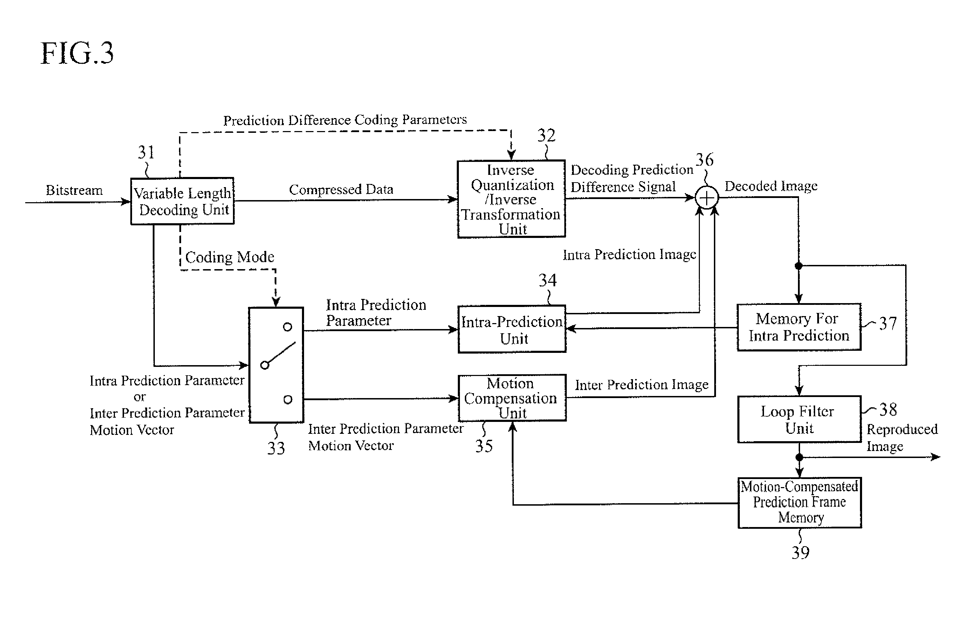

Fig. 3 is a block diagram showing a video decoding device in accordance with Embodiment 1 of the present invention. Referring to Fig. 3, when receiving the bitstream generated by the video encoding device shown in Fig. 1, a variable length decoding unit 31 variable-length-decodes the block partitioning information indicating the partitioning state of each coding block partitioned hierarchically from the bitstream. The variable length decoding unit 31 also carries out a process of referring to the block partitioning information to specify each decoding block (a block corresponding to each encoding block" in the video encoding device of Fig. 1), which is one of units into which each largest decoding block is hierarchically partitioned and on which the video decoding device carries out a decoding process, for each largest decoding block (a block corresponding to each "largest coding block" in the video encoding device shown in Fig. 1), variable-length-decoding the compressed data, the coding mode, the intra prediction parameter (when the coding mode is an intra coding mode), the inter prediction parameter (when the coding mode is an inter coding mode), the prediction difference coding parameters, and the motion vector (when the coding mode is an inter coding mode), which are associated with each decoding block, and also variable-length-decoding the filter parameters for each largest decoding block which are used by a loop filter unit 38. The variable length decoding unit 31 constructs a variable length decoder.

An inverse quantization/inverse transformation unit 32 carries out a process of inverse-quantizing the compressed data variable-length-decoded by the variable length decoding unit 31 for each orthogonal transformation block by referring to the quantization parameter and the orthogonal transformation block partitioning information which are included in the prediction difference coding parameters variable-length-decoded by the variable length decoding unit 31, and also performing an inverse orthogonal transformation process on the transform coefficients which are the compressed data inverse-quantized thereby to calculate a decoded prediction difference signal which is the same as the local decoded prediction difference signal outputted from the inverse quantization/inverse transformation unit 8 shown in Fig. 1. The inverse quantization/inverse transformation unit 32 constructs a difference image generator.

A select switch 33 carries out a process of, when the coding mode variable-length-decoded by the variable length decoding unit 31 is an intra coding mode, outputting the intra prediction parameter variable-length-decoded by the variable length decoding unit 31 to an intra prediction unit 34, and, when the coding mode variable-length-decoded by the variable length decoding unit 31 is an inter coding mode, outputting the inter prediction parameter and the motion vector which are variable-length-decoded by the variable length decoding unit 31 to a motion compensation unit 35.

The intra prediction unit 34 carries out a process of, when the coding mode associated with the decoding block specified from the block partitioning information variable-length-decoded by the variable length decoding unit 31 is an intra coding mode, performing an intra prediction process (intra-frame prediction process) using the intra prediction parameter outputted from the select switch 33 on each prediction block, which is a unit for prediction process at the time of carrying out the prediction process on the decoding block, while referring to a decoded image stored in a memory 37 for intra prediction to generate an intra prediction image. An intra predictor is comprised of the intra prediction unit 34 and the memory 37 for intra prediction.

The motion compensation unit 35 carries out a process of, when the coding mode associated with the decoding block specified from the block partitioning information variable-length-decoded by the variable length decoding unit 31 is an inter coding mode, performing an inter prediction process (motion-compensated prediction process) using the motion vector and the inter prediction parameter which are outputted from the select switch 33 on each prediction block, which is a unit for prediction process at the time of carrying out the prediction process on the above-mentioned decoding block while referring to a decoded image stored in a motion-compensated prediction frame memory 39 to generate an inter prediction image. A motion-compensated predictor is comprised of the motion compensation unit 35 and the motion-compensated prediction frame memory 39.

An adding unit 36 carries out a process of adding the decoded prediction difference signal calculated by the inverse quantization/inverse transformation unit 32 and the intra prediction image generated by the intra prediction unit 34 or the inter prediction image generated by the motion compensation unit 35 to calculate a decoded image which is the same as the local decoded image outputted from the adding unit 9 shown in Fig. 1. The adding unit 36 constructs a decoded image generator. The memory 37 for intra prediction is a recording medium for storing the decoded image calculated by the adding unit 36.

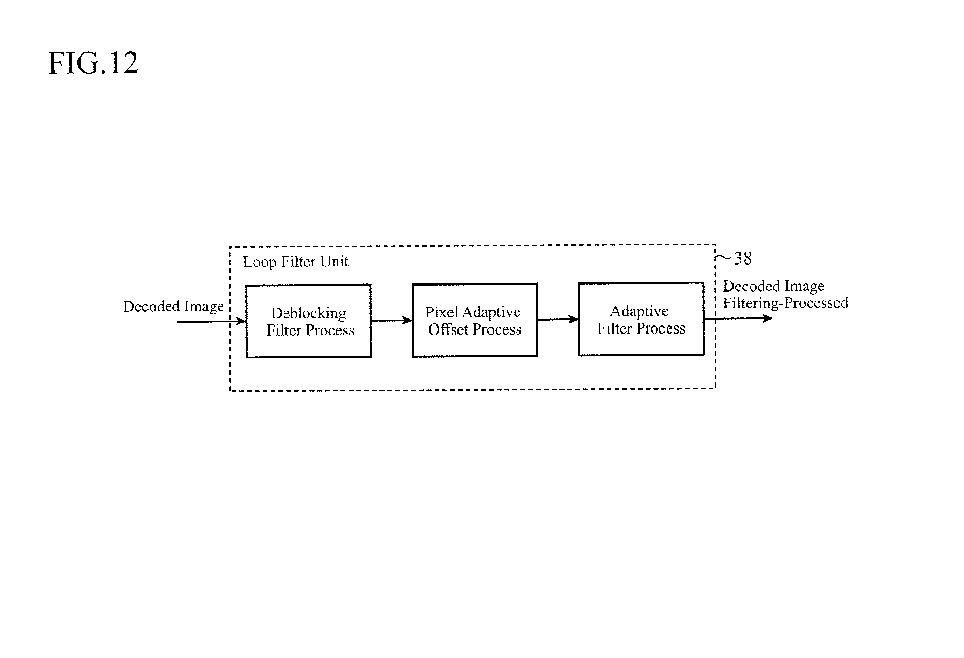

The loop filter unit 38 carries out a process of performing a predetermined filtering process on the decoded image calculated by the adding unit 36 to output the decoded image filtering-processed thereby. Concretely, the loop filter unit performs a filtering (deblocking filtering) process of reducing a distortion occurring at a boundary between orthogonal transformation blocks or a distortion occurring at a boundary between prediction blocks, a process (pixel adaptive offset process) of adaptively adding an offset on a per pixel basis, an adaptive filtering process of adaptively switching among linear filters, such as Wiener filters, to perform the filtering process, and so on. Although the loop filter unit 38 can be constructed in such a way as to perform one of the above-mentioned deblocking filtering process, the above-mentioned pixel adaptive offset process, and the above-mentioned adaptive filtering process, or perform two or more of the processes, as shown in Fig. 12, the loop filter unit 38 must be constructed in such a way as to carry out the same filtering process as the filtering process carried out by the loop filter unit 11 of the video encoding device. The loop filter unit 38 constructs a filter.

In the pixel adaptive offset process, the index indicating the class classifying method set for each largest decoding block, the index being included in the filter parameters variable-length-decoded by the variable length decoding unit 31, is referred to, and, when the index does not show "not carrying out the offset process", each pixel within each largest decoding block is classified into one of classes. Next, a process of adding the offset set for each class included in the filter parameters variable-length-decoded by the variable length decoding unit 31 to the brightness value of each pixel belonging to the class is carried out, thereby improving the image quality of the decoded image. Further, in the adaptive filtering process, the filter parameters variable-length-decoded by the variable length decoding unit 31 (the number of classes (groups) (the number of filters), the filter for the local decoded image belonging to each class (group), the class number (filter number) which is identification information about the identification of the class (group) of each largest decoding block) are referred to, and, when the class (group) indicated by the class number does not show "not carrying out the offset process", the filtering process is carried out on the decoded image belonging to the class (group) by using the filter corresponding to the class number. The motion-compensated prediction frame memory 39 is a recording medium for storing the decoded image on which the filtering process is carried out by the loop filter unit 38.

Further, in a case in which the loop filter unit 11 of the video encoding device is constructed in such a way as to optimally select either the pixel adaptive offset process or the adaptive filtering process for each largest coding block as the method of using both the pixel adaptive offset process and the adaptive filtering process while reducing the amount of computations of the entire filtering process of the loop filter unit 38, the selection information included in the filter parameters variable-length-decoded by the variable length decoding unit 31 and indicating which one of the pixel adaptive offset process on each largest decoding block and the adaptive filtering process on each largest decoding block is carried out is referred to and the pixel adaptive offset process or the adaptive filtering process is carried out on each largest decoding block.

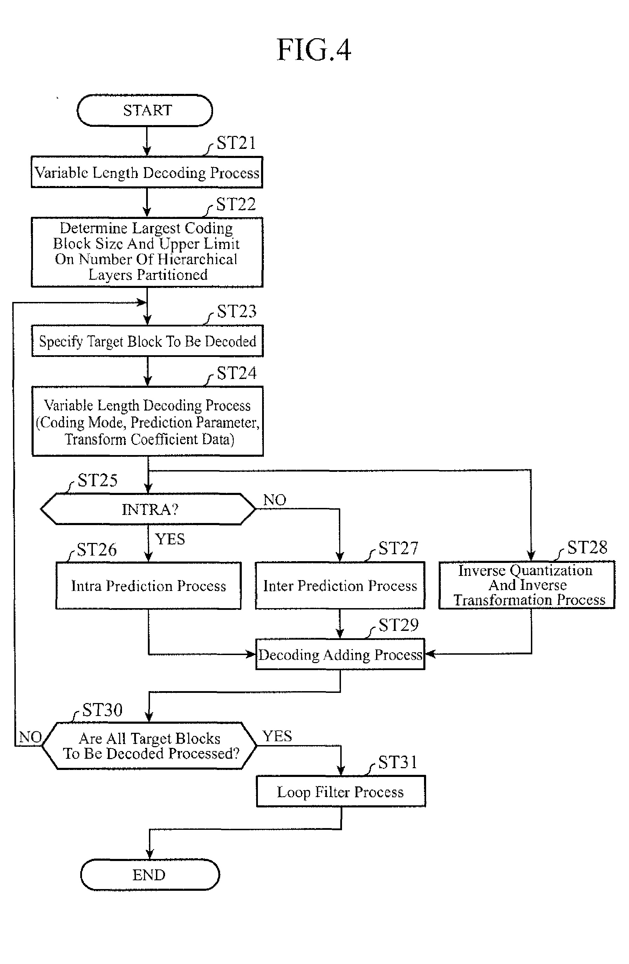

In the example shown in Fig. 3, the variable length decoding unit 31, the inverse quantization/inverse transformation unit 32, the select switch 33, the intra prediction unit 34, the motion compensation unit 35, the adding unit 36, the memory 37 for intra prediction, the loop filter unit 38, and the motion-compensated prediction frame memory 39, which are the components of the video decoding device, can consist of pieces of hardware for exclusive use (e.g., semiconductor integrated circuits in each of which a CPU is mounted, one chip microcomputers, or the like), respectively. As an alternative, the video decoding device can consist of a computer, and a program in which the processes carried out by the variable length decoding unit 31, the inverse quantization/inverse transformation unit 32, the select switch 33, the intra prediction unit 34, the motion compensation unit 35, the adding unit 36, and the loop filter unit 38 are described can be stored in a memory of the computer and the CPU of the computer can be made to execute the program stored in the memory. Fig. 4 is a flow chart showing the processing (video decoding method) carried out by the video decoding device in accordance with Embodiment 1 of the present invention.

Next, the operations of the video encoding and decoding devices will be explained. In this Embodiment 1, a case in which the video encoding device receives each frame of a video as an inputted image, carries out an intra prediction from already-encoded neighborhood pixels or a motion-compensated prediction between adjacent frames, and performs a compression process with orthogonal transformation and quantization on an acquired prediction difference signal, and, after that, carries out variable length encoding to generate a bitstream, and the video decoding device decodes the bitstream outputted from the video encoding device will be explained.

The video encoding device shown in Fig. 1 is characterized in that the video encoding device is adapted for local changes of a video signal in a space direction and in a time direction, partitions the video signal into blocks having various sizes, and carries out intra-frame and inter-frame adaptive encoding. In general, the video signal has a characteristic of its complexity locally varying in space and time. There can be a case in which a pattern having a uniform signal characteristic in a relatively large image region, such as a sky image or a wall image, or a pattern having a complicated texture pattern in a small image region, such as a person image or a picture including a fine texture, also coexists on a certain video frame from the viewpoint of space. Also from the viewpoint of time, a sky image and a wall image have a small local change in a time direction in their patterns, while an image of a moving person or object has a larger temporal change because its outline has a movement of a rigid body and a movement of a non-rigid body with respect to time.

Although a process of generating a prediction difference signal having small signal power and small entropy by using a temporal and spatial prediction, thereby reducing the whole code amount, is carried out in the encoding process, the code amount of parameters used for the prediction can be reduced as long as the parameters can be applied uniformly to as large an image signal region as possible. On the other hand, because the amount of errors occurring in the prediction increases when the same prediction parameter is applied to a large image region in an image signal pattern having a large change in time and space, the code amount of the prediction difference signal increases. Therefore, it is desirable to apply the same prediction parameter to an image region having a large change in time and space to reduce the block size of a block which is subjected to the prediction process, thereby increasing the data volume of the parameter which is used for the prediction and reducing the electric power and entropy of the prediction difference signal.

In this Embodiment 1, a structure of, in order to carry out encoding which is adapted for such the typical characteristics of a video signal, starting the prediction process and so on from a predetermined largest block size first, hierarchically partitioning the region of the video signal into blocks, and adapting the prediction process and the encoding process of encoding the prediction difference to each of the blocks partitioned is provided.

A video signal having a format which is to be processed by the video encoding device shown in Fig. 1 can be a YUV signal which consists of a luminance signal and two color difference signals or a color video image signal in arbitrary color space, such as an RGB signal, outputted from a digital image sensor, a monochrome image signal or an infrared image signal, or an arbitrary video signal in which each video frame consists of a series of digital samples (pixels) in two dimensions, horizontal and vertical. The gradation of each pixel can be an 8-bit, 10-bit, or 12-bit one.

In the following explanation, for convenience[1] sake, a case in which the video signal of the inputted image is a YUV signal unless otherwise specified, and the two color difference components U and V which are signals having a 4 : 2 : 0 format which are subsampled with respect to the luminance component Y are handled will be described. Further, a data unit to be processed which corresponds to each frame of the video signal is referred to as a "picture." In this Embodiment 1, although an explanation will be made in which a "picture" is a video frame signal on which progressive scanning is carried out, a "picture" can be alternatively a field image signal which is a unit which constructs a video frame when the video signal is an interlaced signal.

First, the processing carried out by the video encoding device shown in Fig. 1 will be explained. First, the encoding controlling unit 2 determines the size of each largest coding block which is used for the encoding of a picture (current picture) which is the target to be encoded, and an upper limit on the number of hierarchical layers into which each largest coding block is hierarchically partitioned (step ST1 of Fig. 2). As a method of determining the size of each largest coding block, for example, there can be a method of determining the same size for all the pictures according to the resolution of the video signal of the inputted image, and a method of quantifying a variation in the complexity of a local movement of the video signal of the inputted image as a parameter and then determining a small size for a picture having a large and vigorous movement while determining a large size for a picture having a small movement. As a method of determining the upper limit on the number of hierarchical layers partitioned, for example, there can be a method of determining the same number of hierarchical layers for all the pictures according to the resolution of the video signal of the inputted image, and a method of increasing the number of hierarchical layers to make it possible to detect a finer movement as the video signal of the inputted image has a larger and more vigorous movement, or decreasing the number of hierarchical layers as the video signal of the inputted image has a smaller movement.

The encoding controlling unit 2 also selects a coding mode corresponding to each of the coding blocks into which the inputted image is hierarchically partitioned from one or more available coding modes (step ST2). More specifically, the encoding controlling unit 2 hierarchically partitions each image region having the largest coding block size into coding blocks each having a coding block size until the number of hierarchical layers partitioned reaches the upper limit on the number of hierarchical layers partitioned which is determined in advance, and determines a coding mode for each of the coding blocks. The coding mode can be one of one or more intra coding modes (generically referred to as "INTRA" ) and one or more inter coding modes (generically referred to as "inter"), and the encoding controlling unit 2 selects a coding mode corresponding to each of the coding blocks from among all the coding modes available in the picture currently being processed or a subset of these coding modes.

Each of the coding blocks into which the inputted image is hierarchically partitioned by the block partitioning unit 1, which will be mentioned below, is further partitioned into one or more prediction blocks each of which is a unit on which a prediction process is to be carried out, and the state of the partitioning into the one or more prediction blocks is also included as information in the coding mode information. More specifically, the coding mode information is an index identifying either an intra coding mode or an inter coding mode and what type of partitioning into prediction blocks the coding mode has Although a detailed explanation of a selection method of selecting a coding mode for use in the encoding controlling unit 2 will be omitted hereafter because the selection method is a known technique, there is a method of carrying out an encoding process on each coding block by using arbitrary available coding modes to examine the encoding efficiency, and selecting a coding mode having the highest degree of coding efficiency from among the plurality of available coding modes, for example.

The encoding controlling unit 2 further determines a quantization parameter and an orthogonal transformation block partitioning state, which are used when a difference image is compressed, for each coding block, and also determines a prediction parameter (an intra prediction parameter or an inter prediction parameter) which is used when a prediction process is carried out. When each coding block is further partitioned into prediction blocks on each of which the prediction process is carried out, the encoding controlling unit can select a prediction parameter (an intra prediction parameter or an inter prediction parameter) for each of the prediction blocks. In addition, because when an intra prediction process is carried out on each prediction block in a coding block whose coding mode is an intra coding mode, already-encoded pixels adjacent to the prediction block are used, it is necessary to carry out encoding on a per prediction block basis, and therefore selectable transformation block sizes are limited to the size of the prediction block or less, which will be described in detail.

The encoding controlling unit 2 outputs prediction difference coding parameters including the quantization parameter and the transformation block size to the transformation/quantization unit 7, the inverse quantization/inverse transformation unit 8, and the variable length encoding unit 13. The encoding controlling unit 2 also outputs the intra prediction parameter to the intra prediction unit 4 as needed. The encoding controlling unit 2 further outputs the inter prediction parameter to the motion-compensated prediction unit 5 as needed.

When receiving the video signal as the inputted image, the block partitioning unit 1 partitions the inputted image into coding blocks each having the largest coding block size determined by the encoding controlling unit 2, and further partitions each of the largest coding blocks, into which the inputted image is partitioned, into coding blocks hierarchically, these coding blocks being determined by the encoding controlling unit 2, and outputs each of the coding blocks.

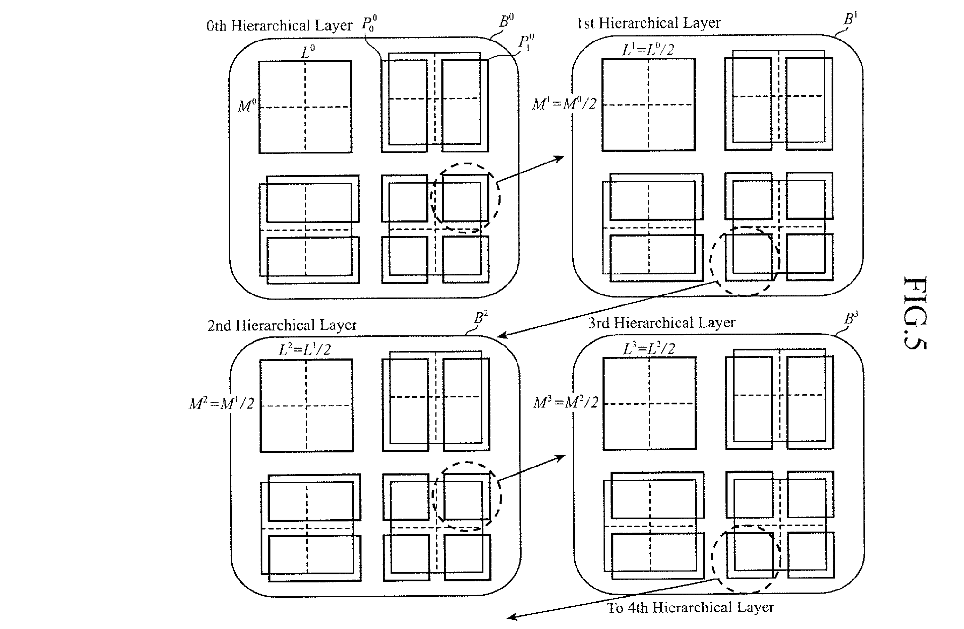

Fig. 5 is an explanatory drawing showing an example in which each largest coding block is hierarchically partitioned into a plurality of coding blocks. Referring to Fig. 5, each largest coding block is a coding block whose luminance component, which is shown by "0-th hierarchical layer", has a size of $(L^0), M^0)$. By carrying out the hierarchical partitioning with each largest coding block being set as a starting point until the depth of the hierarchy reaches a predetermined depth which is set separately according to a quadtree structure, the coding blocks can be acquired. At the depth of n, each coding block is an image region having a size of $(L^n, M^n)$. In this example, although $L^n$ can be the same as or differ from $M^n$, the case of $L^n=M^n$ is shown in Fig. 5.

Hereafter, the coding block size determined by the encoding controlling unit 2 is defined as the size of $(L^n, M^n)$ in the luminance component of each coding block. Because quadtree partitioning is carried out, $(L^{n+1},M^{n+1})=(L^n/2, M^n/2)$ is always established. In the case of a color video image signal (4:4:4 format) in which all the color components have the same sample number, such as an RGB signal, all the color components have a size of $(L^n, M^n)$, while in the case of handling a 4:2:0 format, a corresponding color difference component has a coding block size of $(L^n/2, M^n/2)$.

Hereafter, each coding block in the nth hierarchical layer is expressed as $B^n$, and a coding mode selectable for each coding block $B^n$ is expressed as $m(B^n)$. In the case of a color video signal which consists of a plurality of color components, the coding mode $m(B^n)$ can be configured in such a way that an individual mode is used for each color component, or can be configured in such a way that a common mode is used for all the color components. Hereafter, an explanation will be made by assuming that the coding mode indicates the one for the luminance component of the coding block when having a 4:2:0 format in a YUV signal unless otherwise specified.

Each coding block $B^n$ is partitioned into one or more prediction blocks each showing a prediction unit by the block partitioning unit 1, as shown in Fig. 5. Hereafter, each prediction block belonging to each coding block $B^n$ is expressed as $P_i^n$ (i shows a prediction block number in the nth hierarchical layer). An example of $P_0^0$ and $P_1^0$ is shown

in Fig. 5. How the partitioning of each coding block $B^n$ into prediction blocks is carried out is included as information in the coding mode $m(B^n)$. While a prediction process is carried out on each of all the prediction blocks $P_i^n$ according to the coding mode $m(B^n)$, an individual prediction parameter (an intra prediction parameter or an inter prediction parameter) can be selected for each prediction block $P_i^n$.

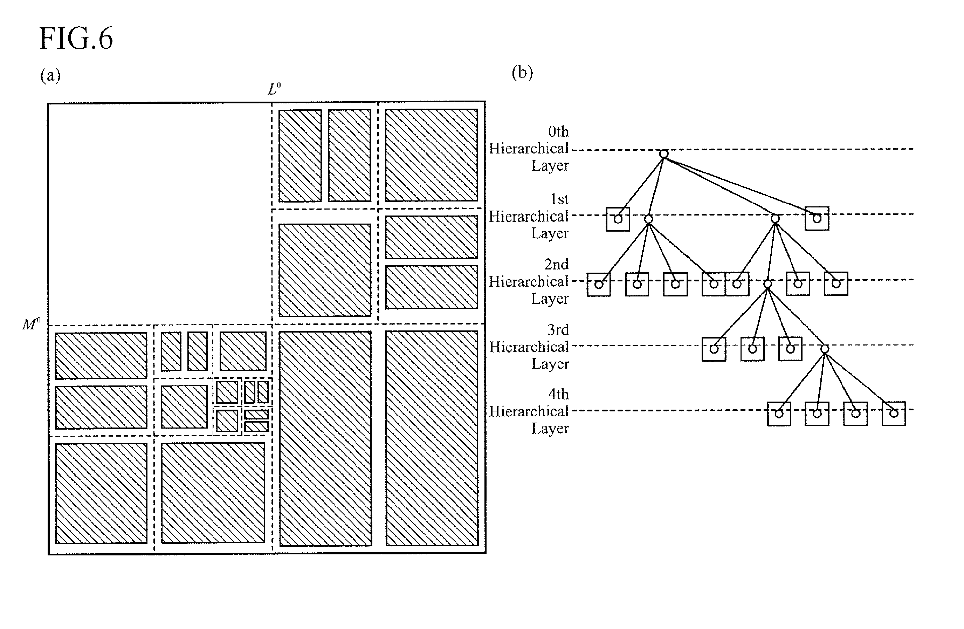

The encoding controlling unit 2 generates such a block partitioning state as shown in Fig. 6 for each largest coding block, and then specifies coding blocks. Each rectangle enclosed by a dotted line of Fig. 6(a) shows a coding block, and each block filled with hatch lines in each coding block shows the partitioning state of each prediction block. Fig. 6(b) shows a situation where a coding mode $m(B^n)$ is assigned to each node through the hierarchical layer partitioning in the example of Fig. 6(a) is shown by using a quadtree graph. Each node enclosed by □ shown in Fig. 6(b) is a node (coding block) to which a coding mode $m(B^n)$ is assigned. Information about this quadtree graph is outputted from the encoding controlling unit 2 to the variable length encoding unit 13 together with the coding mode $m(B^n)$, and is multiplexed into a bitstream.

When the coding mode $m(B^n)$ determined by the encoding controlling unit 2 is an intra coding mode (in the case of $m(B^n) \in$ INTRA), the select switch 3 outputs the coding block $B^n$ outputted from the block partitioning unit 1 to the intra prediction unit 4. In contrast, when the coding mode $m(B^n)$ determined by the encoding controlling unit 2 is an inter coding mode (in the case of $m(B^n)$EINTER), the select switch outputs the coding block $B^n$ outputted from the block partitioning unit 1 to the motion-compensated prediction unit 5.

When the coding mode $m(B^n)$ determined by the encoding controlling unit 2 is an intra coding mode (in the case of $m(B^n) \in$ INTRA), and the intra prediction unit 4 receives the coding block $B^n$ from the select switch 3 (step ST3), the intra prediction unit 4 carries out the intra prediction process on each prediction block $P_i^n$ in the coding block $B^n$ by using the intra prediction parameter determined by the encoding controlling unit 2 while referring to the local decoded image stored in the memory 10 for intra prediction to generate an intra prediction image $P_{INTRAi}^n$ (step ST4). Because the video decoding device needs to generate an intra prediction image which is completely the same as the intra prediction image Pintrai11, the intra prediction parameter used for the generation of the intra prediction image $P_{INTRAi}^n$ is outputted from the encoding controlling unit 2 to the variable length encoding unit 13, and is multiplexed into the bitstream. The details of the processing carried out by the intra prediction unit 4 will be mentioned below.

When the coding mode $m(B^n)$ determined by the encoding controlling unit 2 is an inter coding mode (in the case of $m(B^n) \in$ INTER), and the motion-compensated prediction unit 5 receives the coding block $B^n$ from the select switch 3 (step ST3), the motion-compensated prediction unit 5 compares each prediction block $P_i^n$ in the coding block $B^n$ with the local decoded image which is stored in the motion-compensated prediction frame memory 12 and on which the filtering process is performed to search for a motion vector, and carries out the inter prediction process on each prediction block $P_i^n$ in the coding block $B^n$ by using both the motion vector and the inter prediction parameter determined by the encoding controlling unit 2 to generate an inter prediction image $P_{INTERi}^n$ (step ST5). Because the video decoding device needs to generate an inter prediction image which is completely the same as the inter prediction image $P_{INTERi}^n$, the inter prediction parameter used for the generation of the inter prediction image $P_{INTERi}^n$ is outputted from the encoding controlling unit 2 to the variable length encoding unit 13 and is multiplexed into the bitstream. The motion vector which is searched for by the motion-compensated prediction unit 5 is also outputted to the variable length encoding unit 13 and is multiplexed into the bitstream.

When receiving the coding block $B^n$ from the block partitioning unit 1, the subtracting unit 6 subtracts the intra prediction image $P_{INTRAi}^n$ generated by the intra prediction unit 4 or the inter prediction image $P_{INTERi}^n$ generated by the motion-compensated prediction unit 5 from the prediction block $P_i^n$ in the coding block $B^n$, and outputs a prediction difference signal $e_i^n$ showing a difference image which is the result of the subtraction to the transformation/quantization unit 7 (step ST6).

When receiving the prediction difference signal $e_i^n$ from the subtracting unit 6, the transformation/quantization unit 7 refers to the orthogonal transformation block partitioning information included in the prediction difference coding parameters determined by the encoding controlling unit 2, and carries out an orthogonal transformation process (e.g., a DCT (discrete cosine transform), a DST (discrete sine transform), or an orthogonal transformation process, such as a KL transform, in which bases are designed for a specific learning sequence in advance) on each orthogonal transformation block of the prediction difference signal $e_i^n$ to calculates transform coefficients. The transformation/quantization unit 7 also refers to the quantization parameter included in the prediction difference coding parameters to quantize the transform coefficients of each orthogonal transformation block, and outputs compressed data which are the transform coefficients quantized thereby to the inverse quantization/inverse transformation unit 8 and the variable length encoding unit 13 (step ST7).

When receiving the compressed data from the transformation/quantization unit 7, the inverse quantization/inverse transformation unit 8 refers to the quantization parameter and the orthogonal transformation block partitioning information which are included in the prediction difference coding parameters determined by the encoding controlling unit 2 to inverse-quantize the compressed data about each orthogonal transformation block. The inverse quantization/inverse transformation unit 8 carries out an inverse orthogonal transformation process (e.g. , an inverse DCT, an inverse DST, an inverse KL transform, or the like) on the transform coefficients which are the compressed data inverse-quantized for each orthogonal transformation block, and calculates a local decoded prediction difference signal corresponding to the prediction difference signal $e_i^n$ outputted from the subtracting unit 6 and outputs the local decoded prediction difference signal to the adding unit 9 (step ST8).

When receiving the local decoded prediction difference signal from the inverse quantization/inverse transformation unit 8, the adding unit 9 calculates a local decoded image by adding the local decoded prediction difference signal and either the intra prediction image $P_{INTRAi}^n$ generated by the intra prediction unit 4 or the inter prediction image $P_{INTERi}^n$ generated by the motion-compensated prediction unit 5 (step ST9). The adding unit 9 outputs the local decoded image to the loop filter unit 11 while storing the local decoded image in the memory 10 for intra prediction. This local decoded image is an encoded image signal which is used at the time of subsequent intra prediction processes.

When receiving the local decoded image from the adding unit 9, the loop filter unit 11 carries out the predetermined filtering process on the local decoded image, and stores the local decoded image filtering-processed thereby in the motion-compensated prediction frame memory 12 (step ST10). The details of the process carried out by the loop filter unit 11 will be mentioned below.

The video encoding device repeatedly carries out the processes of steps ST3 to ST9 until the video encoding device completes the processing on all the coding blocks $B^n$ into which the inputted image is partitioned hierarchically, and, when completing the processing on all the coding blocks $B^n$, shifts to a process of step ST13 (steps ST11 and ST12).

The variable length encoding unit 13 entropy-encodes the compressed data outputted thereto from the transformation/quantization unit 7, the block partitioning information about the partitioning of each largest coding block into blocks, which is outputted from the encoding controlling unit 2 (the quadtree information which is shown in Fig. 6(b) as an example), the coding mode $m(B^n)$ and the prediction difference coding parameters, the intra prediction parameter (when the coding mode is an intra coding mode) or the inter prediction parameter (when the coding mode is an inter coding mode) outputted from the encoding controlling unit 2, the motion vector outputted from the motion-compensated prediction unit 5 (when the coding mode is an inter coding mode), and the filter parameters outputted from the loop filter unit 11, and generates the bitstream showing those encoded results (step ST13). The details of the process of variable-length-encoding the filter parameters by the variable length encoding unit 13 will be mentioned below.

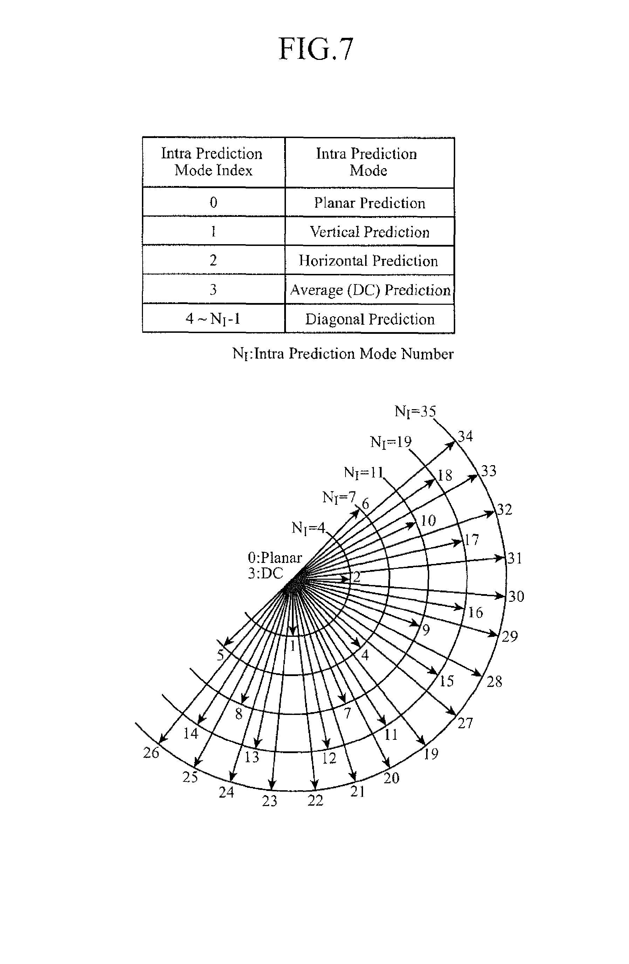

Next, the process carried out by the intra prediction unit 4 will be explained in detail. Fig. 7 is an explanatory drawing showing an example of intra prediction modes each of which is an intra prediction parameter which can be selected for each prediction block $P_i^n$ in the coding block $B^n$. In the figure, $N_I$ shows the number of intra prediction modes. In Fig. 7, the index values of the intra prediction modes and prediction direction vectors represented by each of the intra prediction modes are shown. In the example of Fig. 7, it is designed that a relative angle between prediction direction vectors becomes small with increase in the number of selectable intra prediction modes.

The intra prediction unit 4 carries out the intra prediction process on each prediction block $P_i^n$ by referring to the intra prediction parameter of the prediction block $P_i^n$ to generate an intra prediction image $P_{INTRAi}^n$, as mentioned above. Hereafter, an intra process of generating an intra prediction signal of a prediction block $P_i^n$ in the luminance signal will be explained.

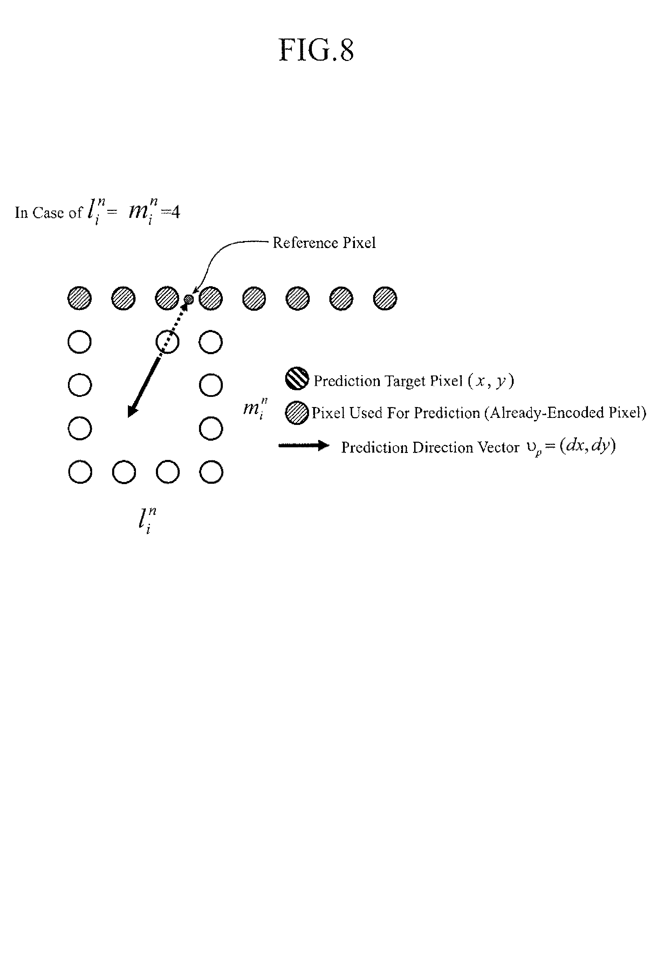

It is assumed that the size of the prediction block $P_i^n$ is $l_i^n \times m_i^n$ pixels. Fig. 8 is an explanatory drawing showing an example of pixels which are used when generating a predicted value of each pixel in the prediction block $P_i^n$ in the case of $l_i^n = m_i^n = 4$. Although $(2 \times l_i^n + 1)$ already-encoded pixels located on top of the prediction block $P_i^n$ and $(2 \times m_i^n)$ already-encoded pixels located to the left of the prediction block $P_i^n$ are set as the pixels used for prediction in the example of Fig. 8, a larger or smaller number of pixels than the pixels shown in Fig. 8 can be used for prediction. Further, although one row or column of pixels adjacent to the prediction block $P_i^n$ are used for prediction in the example shown in Fig. 8, two or more rows or columns of pixels adjacent to the prediction block $P_i^n$ can be alternatively used for prediction.

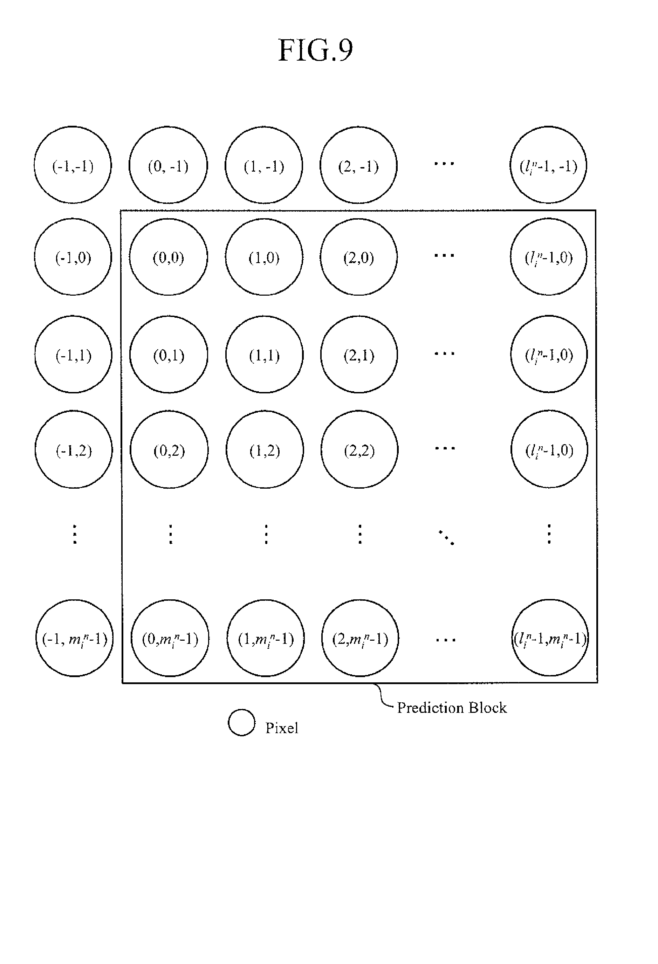

When the index value indicating the intra prediction mode for the prediction block $P_i^n$ is 0 (planar prediction), the intra prediction unit uses already-encoded pixels adjacent to the top of the prediction block $P_i^n$ and already-encoded pixels adjacent to the left of the prediction block $P_i^n$ to determine a value interpolated according to the distance between these pixels and the target pixel to be predicted in the prediction block $P_i^n$ as a predicted value and generates a prediction image. Further, when the index value indicating the intra prediction mode for the prediction block $P_i^n$ is 2 (average (DC) prediction), the intra prediction unit determines the average of the already-encoded pixels adjacent to the top of the prediction block $P_i^n$ and the already-encoded pixels adjacent to the left of the prediction block $P_i^n$ as the predicted value of each pixel in the prediction block $P_i^n$ and generates a prediction image. When the index value indicating the intra prediction mode is other than 0 (planar prediction) and 2 (average prediction), the intra prediction unit generates a predicted value of each pixel in the prediction block $P_i^n$ on the basis of a prediction direction vector $u_p = (dx, dy)$ shown by the index value. As shown in Fig. 9, when the relative coordinates of each pixel in the prediction block $P_i^n$ are expressed as $(x, y)$ with the pixel at the upper left corner of the prediction block $P_i^n$ being defined as the point of origin, each reference pixel which is used for prediction is located at a point of intersection of L shown below and an adjacent pixel.

$$L = \begin{pmatrix} x \\ y \end{pmatrix} + k\upsilon_p \qquad (2)$$

where k is a negative scalar value.

When a reference pixel is at an integer pixel position, the value of the corresponding integer pixel is determined as the predicted value of the target pixel to be predicted, whereas when a reference pixel is not at an integer pixel position, the value of an interpolation pixel generated from the integer pixels which are adjacent to the reference pixel is determined as the predicted value of the target pixel to be predicted. In the example shown in Fig. 8, because a reference pixel is not located at an integer pixel position, the predicted value is interpolated from the values of two pixels adjacent to the reference pixel. The intra prediction unit can use not only the adjacent two pixels but also one or more adjacent pixels to generate an interpolation pixel and determine the value of this interpolation pixel as the predicted value. While the increase in the number of pixels used for the interpolation process provides an advantage of improving the accuracy of computation of an interpolation pixel, because the degree of complexity of computations required for the interpolation process increases with the increase in the number of pixels used for the interpolation process, it is preferable to generate an interpolation pixel from a larger number of pixels in a case in which the video encoding device requires high encoding performance even if the arithmetic load is large.

Through the process described above, the intra prediction unit generates prediction pixels for all the pixels of the luminance signal in the prediction block $P_i^n$, and outputs an intra prediction image $P_{INTRAi}^n$. The intra prediction parameter (intra prediction mode) used for the generation of the intra prediction image $P_{INTRAi}^n$ is outputted to the variable length encoding unit 13 in order to multiplex the intra prediction parameter into the bitstream.

Like in the case of performing a smoothing process on a reference image at the time of carrying out an intra prediction on an 8x8-pixel block in an image which complies with MPEG-4 AVC/H.264 explained previously, even in a case in which an already-encoded pixel adjacent to the prediction block $P_i^n$ on which a smoothing process is carried out is provided as the reference pixel at the time of generating an intermediate prediction image of the prediction block $P_i^n$, the intra prediction unit 4 can carry out the filtering process which is the same as the above-mentioned example on the intermediate prediction image.

The intra prediction unit also carries out an intra prediction process based on the intra prediction parameter (intra prediction mode) on each of the color difference signals of the prediction block $P_i^n$ according to the same procedure as that according to which the intra prediction unit carries out the intra prediction process on the luminance signal, and outputs the intra prediction parameter used for the generation of the intra prediction image to the variable length encoding unit 13. However, selectable intra prediction parameters (intra prediction modes) for each of the color difference signals can differ from those for the luminance signal. For example, in the case of a YUV 4:2:0 format, each of the color difference signals (U and V signals) is the one whose resolution is reduced to one-half that of the luminance signal (Y signal) both in a horizontal direction and in a vertical direction, and the complexity of each of the color difference signals is lower than that of the luminance signal and hence a prediction can be carried out on each of the color difference signals more easily than on the luminance signal. Therefore, by reducing the number of selectable intra prediction parameters (intra prediction modes) for each of the color difference signals to be smaller than that for the luminance signal, a reduction in the code amount required to encode the intra prediction parameter (intra prediction mode) and a reduction in the amount of computations required to carry out the prediction process can be implemented.

Next, the process carried out by the loop filter unit 11 will be explained in detail. The loop filter unit 11 carries out a process of performing a predetermined filtering process on the local decoded image calculated by the adding unit 9 and outputting the local decoded image filtering-processed thereby. Concretely, the loop filter unit carries out a filtering (deblocking filtering) process of reducing a distortion occurring at a boundary between orthogonal transformation blocks and a distortion occurring at a boundary between prediction blocks, a process (pixel adaptive offset process) of adaptively adding an offset on a per pixel basis, an adaptive filtering process of adaptively switching among linear filters, such as Wiener filters, and performing the filtering process, and so on. The loop filter unit 11 can be constructed in such a way as to perform one of the above-mentioned deblocking filtering process, the above-mentioned pixel adaptive offset process, and the above-mentioned adaptive filtering process, or perform two or more of the processes, as shown in Fig. 10. In general, while the image quality improves with increase in the number of types of filtering processes used, the processing load is increased with increase in the number of types of filtering processes used. More specifically, because there is a trade-off between the image quality and the processing load, the structure of the loop filter unit should just be determined according to the processing load acceptable in the video encoding device.

In the pixel adaptive offset process, by using a predetermined method, a pixel included in each largest coding block is classified into one of classes and an offset minimizing the sum of squared errors of brightness values between the image to be encoded and the local decoded image is calculated for each of the classes first. Finally, the process of adding the offset determined for each of the classes to the brightness value of each pixel belonging to the class (each pixel of the local decoded image) is carried out, thereby improving the image quality of the local decoded image.

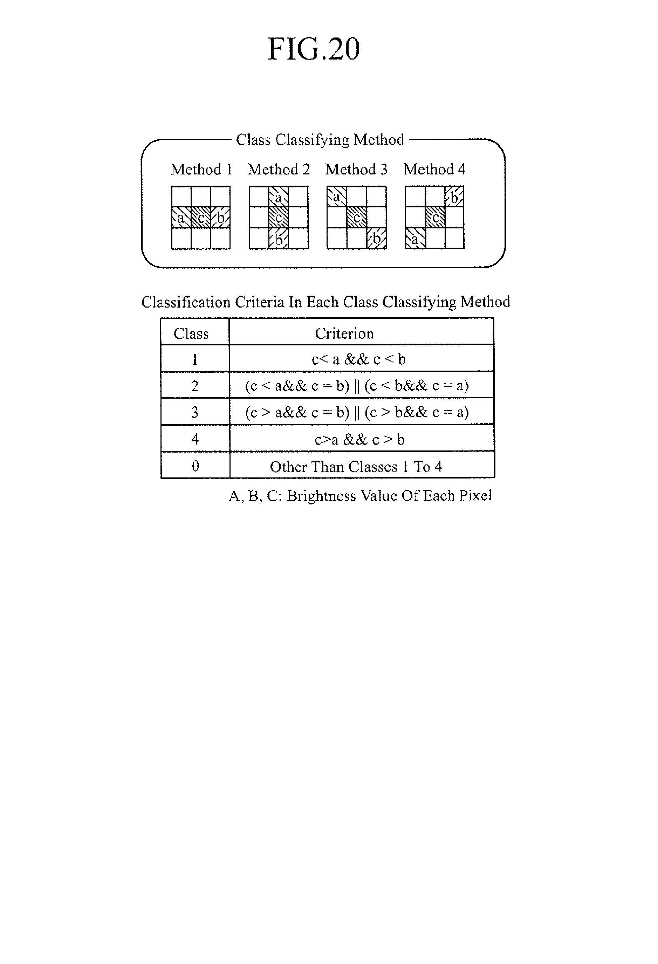

As the predetermined method of carrying out the class classification, there are a method of classifying each pixel into one of classes according to the brightness value of the local decoded image, and a method of classifying each pixel into one of classes according to the state of a neighboring region around the pixel (e.g., whether or not the neighboring region is an edge portion) for each of the directions of edges as shown in Fig. 20. These methods are prepared commonly in both the image encoding device and the image decoding device, and the case of not carrying out the offset process is defined as one class classifying method. The encoding side selectively determines which one of these methods is to be used to carry out the class classification for each of the above-mentioned blocks. Further, the encoding side compares the case of not carrying out the pixel adaptive offset process on the entire picture with the case of carrying out the pixel adaptive offset process determined as mentioned above, and selects which one of the cases is desirable. Accordingly, in the pixel adaptive offset process, enable or disable information showing whether or not the pixel adaptive offset process at the picture level is enabled, and the index indicating the class classifying method selected for each largest coding block and the offset provided for each class of each largest coding block when this enable or disable information indicates that "the process is enabled" are outputted to the variable length encoding unit 13 as a part of the filter parameters.

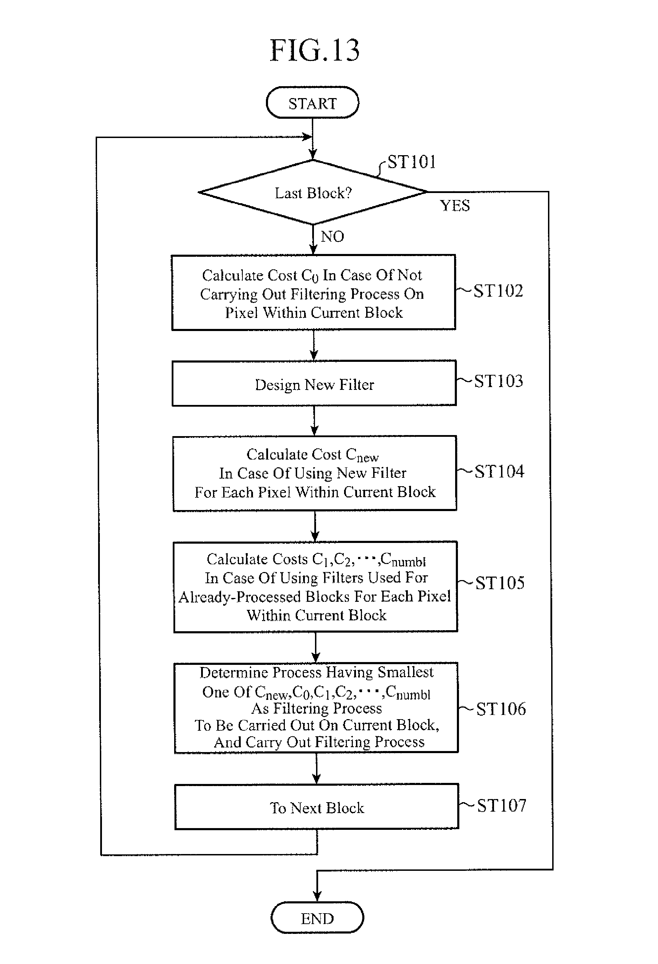

Next, the adaptive filtering process will be explained concretely. Fig. 13 is a flow chart showing an example of the adaptive filtering process. In the example of Fig. 13 , in order to carry out the adaptive filtering process on each largest coding block, a filter selection and a filtering process shown in steps ST102 to ST106 are performed on each largest coding block (step ST101).

The filter selection and the filtering process shown in steps ST102 to ST106 will be explained. First, a cost $C_0$ in the case of not carrying out the filtering process is calculated as that in a case of a filter number 0 for the largest coding block which is the current target to be processed (step ST102). As the definition of the cost, there is an example shown below

$$\text{Cost} = D + \lambda \cdot R \qquad\qquad (3)$$

where D is the sum of squared errors between the image signal to be encoded within the block and the local decoded image signal on which the filtering process is carried out, and $\lambda$ is a constant. Further, R is the code amount required when encoding the filter number for selecting the filter to be used, and the coefficients of the filter corresponding to the filter number.

In this embodiment, although the cost is expressed by the equation (3), the cost can be alternatively given only by the sum of squared errors D, for example. Although the accuracy of the cost drops when the cost is defined this way, the load of calculating the cost decreases. As an alternative, D can be an absolute value sum of errors with a lower arithmetic load, instead of the sum of squared errors. Which equation is used to define the cost can be determined according to the arithmetic load acceptable by the video encoding device. When calculating the cost $C_0$ in the case of not carrying out the filtering process, D is the sum of squared errors between the image signal to be encoded and the local decoded image signal on which the filtering process is not carried out, and the code amount R required for the filter is 0.

Next, a Wiener filter minimizing the sum of squared errors between the image signal to be encoded and the local decoded image signal is calculated according to the equation (1) with each pixel in the largest coding block which is the target to be processed being set as a target (step ST103), and a cost $C_{new}$ in the case of carrying out the filtering process on each pixel within the block is calculated (step ST104). In this case, the filtering process using the Wiener filter is expressed by the following equation (4).

$$S'(x_0) = a_0 S(x_0) + a_1 S(x_1) + \cdots + a_{L-1} S(x_{L-1}) + a_L \qquad\qquad (4)$$

where $x_0$ shows the target pixel to be filtered, $x_1$ (l=0, 1, 2, ..., L-1) shows the reference pixels of the filter (including the target pixel to be filtered), and L shows the number of reference pixels of the filter. Further, S(x) shows the brightness value of the pixel x, S'(x) shows the brightness value on which the filtering process is performed of the pixel x, and $a_m$ (m= 0, 1, 2, ..., L) shows the filter coefficients. $a_L$ shows an offset coefficient, and the offset coefficient can be always set to invalid by setting $a_L$ to 0. By doing this way, although the filter performance drops, the number of filter coefficients to be encoded can be reduced and the code amount required to encode the filter coefficients can be reduced.

In addition, filters (filters whose filter numbers are set to 1, 2, ..., and numbl respectively) which can be used other than the filter designed for the largest coding block which is the current target to be processed are used to calculate the costs $C_1$, $C_2$, ..., and $C_{numb1}$ in the case of carrying out the filtering process (step ST105). numbl shows the number of filters, other than the filter designed for the largest coding block which is the current target to be processed, which can be used. As examples of the filters, other than the filter designed for the largest coding block which is the current target to be processed, which can be used, there can be provided a filter used for a largest coding block on which the filtering process is already carried out, filters prepared in advance before the encoding process is carried out, and so on.

Next, the smallest cost is specified from among the costs $C_{new}$. $C_0$, $C_1$, $C_2$, ..., and $C_{numbl}$ which are calculated until now, and the filtering process associated with the smallest cost is determined as the filtering process for the largest coding block which is the current target to be processed (step ST106). At that time, when the determined filtering process is the filter (cost $C_{new}$) designed for the largest coding block which is the current target to be processed, this designed filter is set as a filter having a number of numb+1 (filter number is numbl+1) which can be used for the largest coding block which is the next target to be processed, and the number numbl of filters which can be used is incremented by one. The video encoding device then shifts to a selection of a filter for the largest coding block which is the next target to be processed, and the filtering process on this coding block (step ST107). The filter number which is set as mentioned above is defined as the class number, and the number of filters is referred to as the number of classes.

The video encoding device carries out the above-mentioned process on all the largest coding blocks, and finally compares the case of not carrying out the pixel adaptive offset process on the entire picture with the case of carrying out the pixel adaptive offset process determined as mentioned above on each largest coding block, and selects an optimal one of the cases. Therefore, in the adaptive filtering process, the enable or disable information indicating whether or not the pixel adaptive offset process at the picture level is enabled, and the number of classes, the class number of each largest coding block including "no filtering process", and the filter coefficients of each class when the enable or disable information indicates that "the process is enabled" are outputted to the variable length encoding unit 13 as a part of the filter parameters.

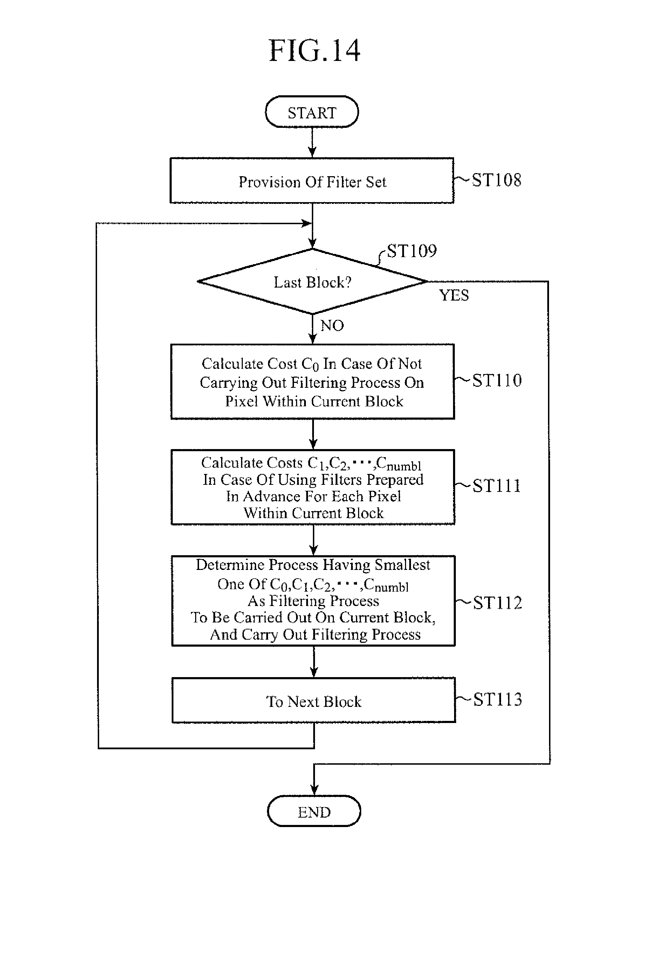

As an example of the adaptive filtering process, besides the example shown in Fig. 13, an example shown in Fig. 14 can be provided. The example of Fig. 14 differs from that of Fig. 13 in that only the method of selecting a filtering process for each largest coding block differs, while the example of Fig. 14 is the same as that of Fig. 13 in that the class number showing the filter used for each largest coding block and the filter corresponding to each class number are set as filter parameters outputted to the variable length encoding unit 13. More specifically, in the example of Fig. 14, filters which are used within the picture are prepared in advance (step ST108), a cost $C_0$ (step DST110) in the case of not carrying out the filtering process, and costs $C_1$, $C_2$, ..., and $C_{numbl}$ in the case of using the filters prepared in advance respectively (step ST111) are calculated for each largest coding block, and an optimal filtering process whose cost is the smallest is selected (step ST112). The processes in steps ST110 to DST112 are carried out on all the largest coding blocks within the picture (steps ST109 and ST113) to determine a filtering process for each of the largest coding blocks.

As compared with the example shown in Fig. 13, because only the filter set prepared in advance is used in the example of Fig. 14, the process of designing a filter for each largest coding block unit becomes unnecessary. Therefore, although the optimality of the filter is reduced, the processing load can be reduced. Therefore, when greater importance is attached to the processing load than to an improvement effect of the filtering process on the image quality, what is necessary is just to use the example shown in Fig. 14.

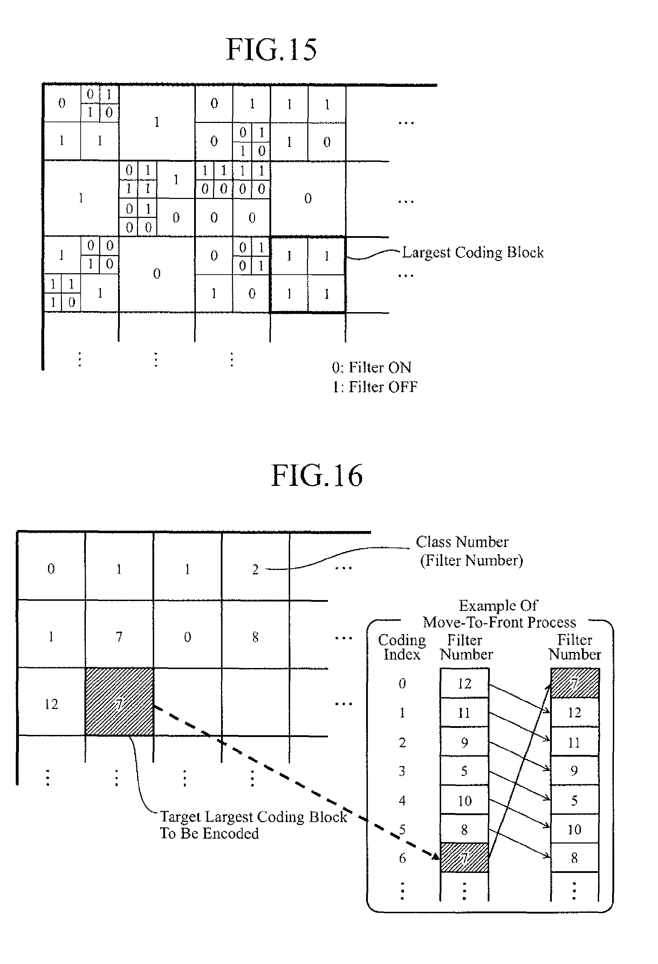

Further, although an optimal filtering process is determined for each largest coding block in the above-mentioned example, there is a possibility that the sum of squared errors of the brightness value between the image to be encoded and the local decoded image increases through the filtering process when taking into consideration a case of performing the filtering process on each of regions smaller than largest coding blocks. Therefore, as shown in Fig. 15, whether or not to carry out the filtering process on each of coding blocks into which each largest coding block is partitioned can be selected. Because by doing this way, the number of pixels in each of which the square errors of the brightness value between the image to be encoded and the local decoded image increase can be reduced, a high-accuracy filtering process can be implemented. When this process is carried out, it is necessary to also encode the enable or disable information indicating whether or not the filtering process on each coding block is enabled as a filter parameter. Even when the on/off process of switching on or off the filter for each coding block is introduced into the pixel adaptive offset process, the same advantage as that provided in the case of introducing the on/off process into the adaptive filtering process is provided.

In addition, although a single optimal filtering process is determined for each largest coding block in the above-mentioned example, the smaller size blocks within each largest coding block can be classified into groups according to their local characteristics (the degree of scatter of the brightness values, such as variance, and the directions of edges) or the like, a filter is designed for each of the groups, and a filtering process can be carried out on each of the groups. By doing this way, although the code amount required for the filter increases because it is necessary to encode the number of filters equal to the number of groups for each largest coding block, a high-accuracy filtering process can be implemented because an optimal filter can be used for each of the smaller size regions. In the case in which the video encoding device is constructed in such a way as to carry out this process, the video decoding device also needs to be constructed in such a way as to carry out the same group classification as that carried out by the video encoding device.

Further, as the method of using both the pixel adaptive offset process and the adaptive filtering process, instead of using the structure shown in Fig. 10, either the pixel adaptive offset process or the adaptive filtering process can be selected optimally for each largest coding block. In the case in which the video encoding device is constructed this way, a high-accuracy filtering process can be implemented while reducing the amount of computations of the filtering process on each largest coding block. However, in the case in which the video encoding device is constructed this way, the selection information indicating which one of the pixel adaptive offset process on each largest coding block and the adaptive filtering process is to be carried out is outputted to the variable length encoding unit 13 as a part of the filter parameters.

Further, although the example of carrying out a selection of a class classifying method in the pixel adaptive offset process and a selection of a class in the adaptive filtering process for each largest coding block is explained as above, the selections can be alternatively carried out for each block having an arbitrary block size. By doing this way, when encoding an image not having a complicated pattern, the selections are carried out on blocks having a larger block size than largest coding blocks. As a result, the selection information associated with each block to be encoded can be reduced without reducing the image quality improvement capability much. In contrast, when encoding an image having a complicated pattern, the selections are carried out on blocks having a smaller block size than largest coding blocks. As a result, although the selection information associated with each block to be encoded increases, processes following change in the complicated pattern can be implemented, and therefore a large image quality improvement effect can be achieved. When carrying out a selection of a class classifying method in the pixel adaptive offset process and a selection of a class in the adaptive filtering process for each coding block having an arbitrary block size, as mentioned above, the above-mentioned block size is outputted to the variable length encoding unit 13 as a part of the filter parameters.

Next, the details of the process of variable-length-encoding the filter parameters will be explained. The variable length encoding unit 13 variable-length-encodes the filter parameters outputted thereto from the loop filter unit 11. The filter parameters include, as the parameters necessary for the pixel adaptive offset process, the enable or disable information indicating whether or not the pixel adaptive offset process at the picture level is enabled, and the index indicating the class classifying method for each largest coding block and the offset provided for each class of each largest coding block when the enable or disable information indicates that "the process is enabled." Further, the filter parameters include, as the parameters necessary for the adaptive filtering process, the enable or disable information indicating whether or not the adaptive filtering process at the picture level is enabled, and the number of classes, the class number showing the filter used for each largest coding block, and the filter coefficients corresponding to each class number when the enable or disable information indicates that "the process is enabled."

Particularly, in the variable length encoding of the class number of each largest coding block in the adaptive filtering process, an encoding process using Move-To-Front shown in Fig. 16 is carried out. Move-To-Front is a process of encoding the class number, and, after that, assigning the class number to the smallest coding index (index 0), and then incrementing the coding index corresponding each of the other class numbers by one. By thus updating the coding index for each largest coding block, the occurrence probability of the coding index concentrates at near zero when a spacial correlation exists between class numbers. Therefore, by carrying out the variable length encoding according to this frequency of occurrence probability, the class number can be encoded with a high degree of coding efficiency. In addition, in a case of using Golomb coding in the above-mentioned variable length encoding of the coding index, the maximum of the coding index is unnecessary for the decoding process. More specifically, because the number of classes is unnecessary in the case of using Golomb coding, it is not necessary to encode the number of classes. Accordingly, the use of Golomb coding makes it possible to reduce the code amount required to encode the number of classes. Further, because the maximum of the encoding index is similarly unnecessary for the decoding process even in a case of using alpha coding (Unary coding), gamma coding, delta coding, or the like, the encoding of the number of classes becomes unnecessary. As an alternative, a probability model of the variable length encoding by using the number of selectable filter indexes (numbl shown in Fig. 13) can be designed every time when carrying the encoding on each largest coding block, and entropy encoding can be carried out. Because the video encoding device can carry out the encoding on the basis of the probability of occurrence of only a filter which can be actually selected by doing this way, the video encoding device can carry out the encoding with a higher degree of efficiency. Also in this case, it is not necessary to encode the number of classes, and the code amount can be reduced.

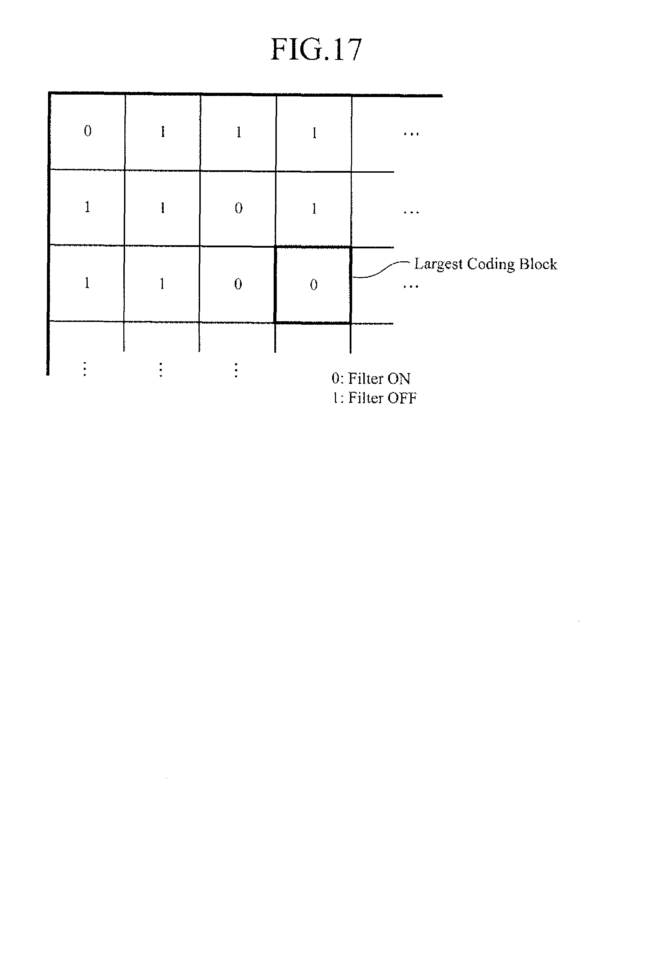

As the encoding method of encoding the class number (filter number) of each largest coding block, there can be a method of, as shown in Fig. 17, encoding the enable or disable information indicating whether or not the filtering process on each largest coding block is enabled first, and, when the enable or disable information indicates that "the filtering process is enabled", carrying out the previously-explained process of encoding the class number. By doing in this way, when the occurrence probability of each class in the case of not carrying out the filtering process greatly differs from the occurrence probability of each class in the case of carrying out the filtering process, the design of the probability model of the variable length encoding can be simplified.

Further, also when carrying out the process of encoding the index indicating the class classifying method selected for each largest coding block in the pixel adaptive offset process, the use of Move-To-Front makes it easy for the occurrence probability of the coding index to concentrate at near zero, like when carrying out the process of encoding the class number of each largest coding block in the above-mentioned adaptive filtering process. Therefore, by carrying out the variable length encoding according to this frequency of occurrence probability, the index can be encoded with a high degree of coding efficiency.

For both the encoding of the class number (class index) of each largest coding block in the adaptive filtering process, and the encoding of the index indicating the class classifying method selected for each largest coding block in the pixel adaptive offset process, instead of the above-mentioned encoding method using Move-To-Front, there can be provided a method of encoding a flag indicating whether or not the class classifying method selected for each largest coding block is the same as that selected for a neighboring block (e.g., a block on top or to the left of the largest coding block), and an index indicating which block has the same class classifying method as that of the largest coding block when the flag indicates that the class classifying method is "the same" or an index to be encoded when the flag indicates that the class classifying method is "not the same. " As an alternative, as shown in Fig. 23, there can be provided a method of encoding both a flag indicating whether or not the coding target block has the same index as the block located on top of the coding target block and a parameter (run-length) showing how many blocks extending to the right have the same index as the coding target block, and, when the coding target block does not have the same index as the block located to the left of the coding target block and does not have the same index as the block located on top of the coding target block, i.e., only when run-length is terminated at the block to the left of the coding target block and the flag indicating whether the coding target block has the same index as the block located on top of the coding target block indicates that the coding target block "does not have the same index", encoding an index to be encoded. These methods can implement a high degree of coding efficiency in a case in which there exists a spacial correlation with the index of the block to the left of the coding target block, like in the case of using the encoding method using Move-To-Front. In addition, these methods can implement a high degree of coding efficiency also in a case in which there exists a spacial correlation with the index of the block on top of the coding target block, unlike in the case of using the encoding method using Move-To-Front.

Into the header information, the largest number of offsets in the pixel adaptive offset process which can be used on a per picture basis and the largest number of classes in the adaptive filtering process which can be used on a per picture basis can be encoded. Because the largest number of offsets and the largest number of filters which have to be decoded on a per picture basis by the decoding side are apparent in the case in which the encoding side does this way, restrictions for implementing the real-time decoding device can be defined by the header information

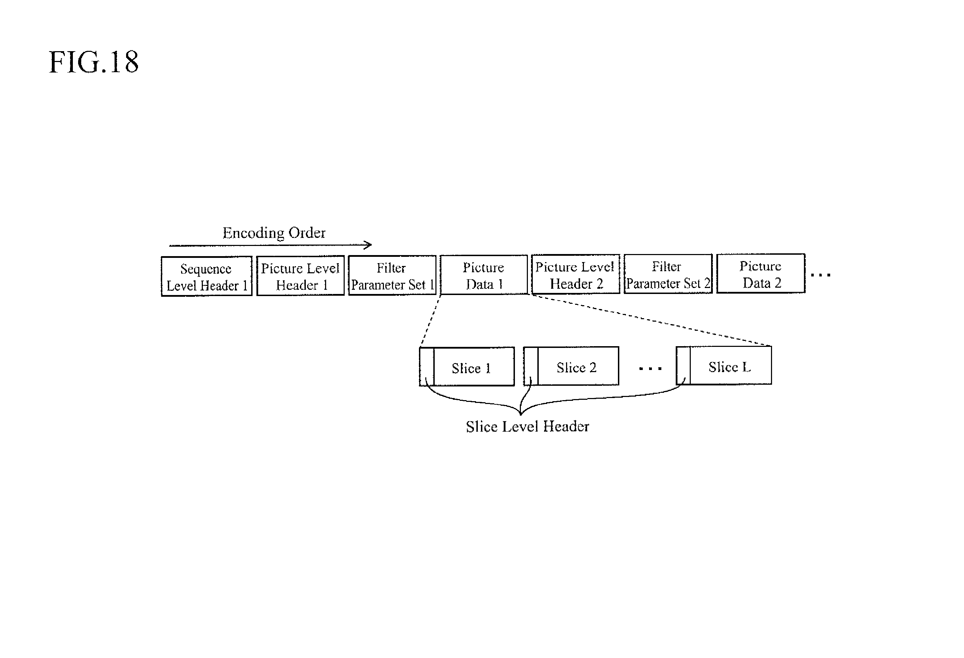

Fig. 18 shows the bitstream generated by the variable length encoding unit 13. Into the bitstream, at least one sequence level header and at least one picture level header are inserted in front of pictured data, so that a parameter required to decode each picture can be referred to. Further, the pictured data are partitioned into one or more slices and are encoded, and each slice can be constructed for one of coding blocks into which each largest coding block is partitioned. Then, at least one variable-length-encoded filter parameter is inserted, as a filter parameter set, in front of the pictured data, like the picture level header. Each slice is made to have an index indicating which filter parameter set is referred to in its slice header, so that the parameter required for the process by the loop filter unit 11 can be referred to for each slice.

Further, in both the adaptive filtering process and the pixel adaptive offset process, when the adaptive filtering process is defined to select whether or not to carry out the filtering process for each of coding blocks into which each largest coding block is partitioned, as shown in Fig. 15, the enable or disable information indicating whether or not this filtering process on each coding block is enabled is variable-length-encoded and is multiplexed into the pit stream. The encoded enable or disable information indicating whether or not the filtering process on each coding block is enabled is multiplexed into each slice shown in Fig. 18, and the enable or disable information indicating whether or not the filtering process in the range of coding blocks owned by each slice is enabled is multiplexed into the slice header. As an alternative, the information can be multiplexed into the bitstream as a filter parameter set, together with the other filter parameters.

Next, the processing carried out by the video decoding device shown in Fig. 3 will be explained concretely. When receiving the bitstream generated by the video encoding device shown in Fig. 1, the variable length decoding unit 31 carries out a variable length decoding process on the bitstream (step ST21 of Fig. 4) and decodes the frame size information on a per sequence basis, each sequence consisting of one or more fames of pictures, or on a per picture basis. At that time, the variable length decoding unit decodes the filter parameters which are encoded as the filter parameter set, and which are used by the loop filter unit 38. The filter parameters include, as the parameters necessary for the pixel adaptive offset process, the enable or disable information indicating whether or not the pixel adaptive offset process at the picture level is enabled, and the index indicating the class classifying method selected for each largest decoding block and the offset provided for each class of each largest decoding block when the enable or disable information indicates that "the process is enabled." The filter parameters include, as the parameters necessary for the adaptive filtering process, the enable or disable information indicating whether or not the adaptive filtering process at the picture level is enabled, and the number of classes, the class number showing the filter used for each largest decoding block, and the filter coefficients corresponding to each class number when the enable or disable information indicates that "the process is enabled. " However, because the frame size information can be decoded even if the number of classes is unknown in the case in which the encoding of the class number showing the filter used for each largest decoding block is carried out by using Golomb coding, alpha coding (Unary coding), gamma coding, delta coding, or the like, or in the case in which a probability model is designed only by using the number of classes which can be selected for each largest decoding block and entropy coding is carried out, the video encoding device does not need encode the number of classes. In the case in which the video encoding device does not encode the number of classes this way, the video decoding device does not carry out decoding of the number of classes.

The variable length decoding unit 31 also determines the largest encoding block size and the upper limit on the number of hierarchical layers partitioned which are determined by the encoding controlling unit 2 of the video encoding device shown in Fig. 1 according to the same procedure as that according to which the video encoding device does (step ST22). For example, when the largest encoding block size and the upper limit on the number of hierarchical layers partitioned are determined according to the resolution of the video signal, the variable length decoding unit determines the largest encoding block size on the basis of the decoded frame size information and according to the same procedure as that according to which the video encoding device does. When the largest encoding block size and the upper limit on the number of hierarchical layers partitioned are multiplexed into the bitstream by the video encoding device, the variable length decoding unit uses the values decoded from the bitstream. Hereafter, the above-mentioned largest encoding block size is referred to as the largest decoding block size, and a largest coding block is referred to as a largest decoding block in the video decoding device. The variable length decoding unit 31 decodes the partitioning state of a largest decoding block as shown in Fig. 6 for each determined largest decoding block. The variable length decoding unit hierarchically specifies decoding blocks (i.e., blocks corresponding to "coding blocks" which are processed by the video encoding device shown in Fig. 1) on the basis of the decoded partitioning state (step ST23).

The variable length decoding unit 31 then decodes the coding mode assigned to each decoding block. The variable length decoding unit 31 partitions each decoding block into one or more prediction blocks each of which is a unit for prediction process on the basis of the information included in the coding mode, and decodes the prediction parameter assigned to each of the one or more prediction blocks (step ST24).

More specifically, when the coding mode assigned to a decoding block is an intra coding mode, the variable length decoding unit 31 decodes the intra prediction parameter for each of the one or more prediction blocks which are included in the decoding block and each of which is a unit for prediction process. In contrast, when the coding mode assigned to a decoding block is an inter coding mode, the variable length decoding unit decodes the inner prediction parameter and the motion vector for each of the one or more prediction blocks which are included in the decoding block and each of which is a unit for prediction process (step ST24). The variable length decoding unit 31 also decodes the compressed data (transformed and quantized transform coefficients) of each orthogonal transformation block on the basis of the orthogonal transformation block partitioning information included in the prediction difference coding parameters (step ST24).

When the coding mode $m(B^n)$ variable-length-decoded by the variable length decoding unit 31 is an intra coding mode (when $m(B^n) \in$ INTRA), the select switch 33 outputs the intra prediction parameter of each prediction block unit, which is variable-length-decoded by the variable length decoding unit 31, to the intra prediction unit 34. In contrast, when the coding mode $m(B^n)$ variable-length-decoded by the variable length decoding unit 31 is an inter coding mode (when $m(B^n) \in$ INTER), the select switch outputs the inter prediction parameter and the motion vector of each prediction block unit, which are variable-length-decoded by the variable length decoding unit 31, to the motion compensation unit 35.

When the coding mode $m(B^n)$ variable-length-decoded by the variable length decoding unit 31 is an intra coding mode ($m(B^n) \in$ INTRA) (step ST25), the intra prediction unit 34 receives the intra prediction parameter of each prediction block unit outputted from the select switch 33, and carries out an intra prediction process on each prediction block $P_i^n$ in the decoding block $B^n$ using the above-mentioned intra prediction parameter while referring to the decoded image stored in the memory 37 for intra prediction to generate an intra prediction image $P_{INTRAi}^n$ according to the same procedure as that which the intra prediction unit 4 shown in Fig. 1 uses (step ST26).

When the coding mode $m(B^n)$ variable-length-decoded by the variable length decoding unit 31 is an inter coding mode ($m(B^n) \in$ INTER) (step ST25), the motion compensation unit 35 receives the motion vector and the inter prediction parameter of each prediction block unit which are outputted from the select switch 33, and carries out an inter prediction process on each prediction block $P_i^n$ in the decoding block $B^n$ using the above-mentioned motion vector and the above-mentioned inter prediction parameter while referring to the decoded image stored in the motion-compensated prediction frame memory 39 and on which the filtering process is carried out to generate an inter prediction image $P_{INTERi}^n$ (step ST27).

When receiving the compressed data and the prediction difference coding parameters from the variable length decoding unit 31, the inverse quantization/inverse transformation unit 32 inverse-quantizes the compressed data about each orthogonal transformation block by referring to the quantization parameter and the orthogonal transformation block partitioning information which are included in the prediction difference coding parameters according to the same procedure as that according to which the inverse quantization/inverse transformation unit 8 shown in Fig. 1 does. The inverse quantization/inverse transformation unit 32 also carries out an inverse orthogonal transformation process on the transform coefficients of each orthogonal transformation block which are the compressed data which the inverse quantization/inverse transformation unit inverse-quantizes to calculate a decoded prediction difference signal which is the same as the local decoded prediction difference signal outputted from the inverse quantization/inverse transformation unit 8 shown in Fig. 1 (step ST28).

The adding unit 36 adds the decoded prediction difference signal calculated by the inverse quantization/inverse transformation unit 32 and either the intra prediction image $P_{INTRAi}^n$ generated by the intra prediction unit 34 or the inter prediction image $P_{INTERi}^n$ generated by the motion compensation unit 35 to calculate a decoded image and output the decoded image to the loop filter unit 38, and also stores the decoded image in the memory 37 for intra prediction (step ST29). This decoded image is a decoded image signal which is used at the time of subsequent intra prediction processes.

When completing the processes of steps ST23 to ST29 on all the decoding blocks $B^n$ (step ST30), the loop filter unit 38 carries out a predetermined filtering process on the decoded image outputted from the adding unit 36, and stores the decoded image filtering-processed thereby in the motion-compensated prediction frame memory 39 (step ST31). Concretely, the loop filter unit carries out a filtering (deblocking filtering) process of reducing a distortion occurring at a boundary between orthogonal transformation blocks and a distortion occurring at a boundary between prediction blocks, a process (pixel adaptive offset process) of adaptively adding an offset to each pixel, an adaptive filtering process of adaptively switching among linear filters, such as Wiener filters, and performing the filtering process, and so on. While the loop filter unit 38 can be constructed in such a way as to perform one of the above-mentioned deblocking filtering process, the above-mentioned pixel adaptive offset process, and the above-mentioned adaptive filtering process, or perform two or more of the processes, as shown in Fig. 12, the loop filter unit has to be constructed in such a way as to carry out the same filtering process as the filtering process carried out by the loop filter unit 11 of the video encoding device.

In the pixel adaptive offset process, the index indicating the class classifying method selected for each largest decoding block included in the filter parameters variable-length-decoded by the variable length decoding unit 31 is referred to, the class classifying method corresponding to the index is specified from the class classifying methods prepared in advance, and a classification of each pixel within each largest decoding block into one of classes by using the class classifying method is carried out. Then, the process of adding the offset provided for each class included in the filter parameters variable-length-decoded by the variable length decoding unit 31 to the brightness value of each pixel (each pixel of the decoded image) belonging to the above-mentioned class is carried out.

Further, in the adaptive filtering process, the filter parameters variable-length-decoded by the variable length decoding unit 31 (the number of classes (the number of filters)), the filter for the local decoded image belonging to each class, and the class number (filter number) which is identification information about the identification of the class of each block are referred to, and, when the class shown by the class number does not show "the offset process is not carries out", the filtering process is carried out on the decoded image belonging to the class by using the filter corresponding to the class number.

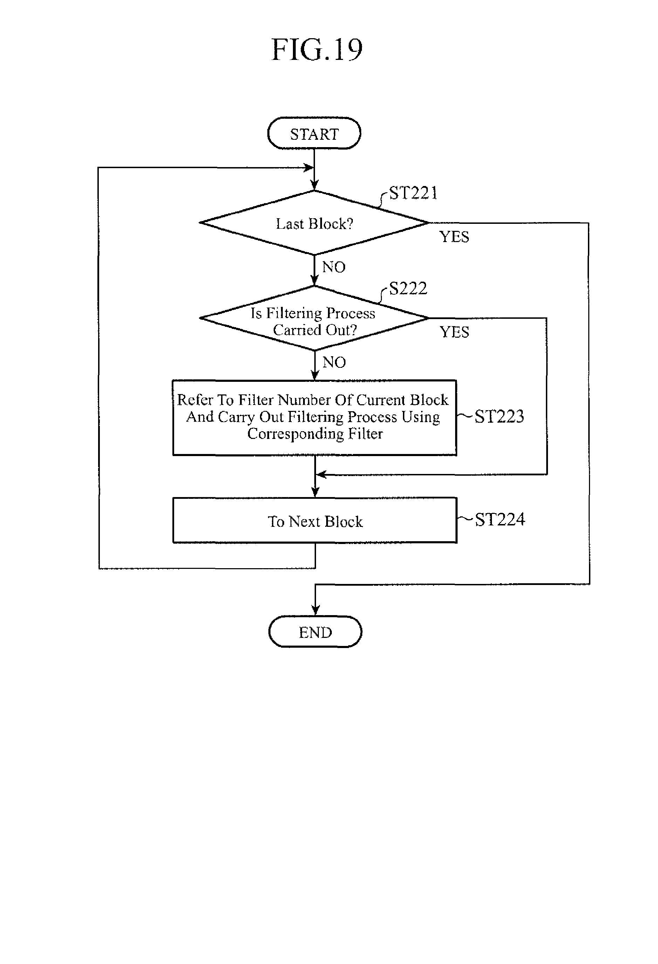

Fig. 19 is a flow chart showing an example of the adaptive filtering process. In the example of Fig. 19, in order to carry out the adaptive filtering process for each largest coding block, a filtering process shown in steps ST222 to ST224 are performed on each largest decoding block (step ST221). The filtering process shown in steps ST222 to ST224 will be explained.

First, on the basis of the class number of each largest decoding block included in the filter parameters variable-length-decoded by the variable length decoding unit 31, whether or not to carry out the filtering process on the largest decoding block which is the target to be processed is determined (step ST222). When carrying out the filtering process, the filtering process is carried out on each pixel within the block by using the filter corresponding to the above-mentioned class number (step ST223). The video decoding device then shifts to the next largest decoding block (ST224). The video decoding device carries out the above-mentioned processes on all the largest decoding blocks, and stores the decoded images on which the video decoding device carries out the processes in the motion-compensated prediction frame memory 39.

Further, in a case in which the loop filter unit 11 of the video encoding device is constructed in such a way as to make an optimum selection of either one of the pixel adaptive offset process and the adaptive filtering process for each largest coding block as the method using both the pixel adaptive offset process and the adaptive filtering process while reducing the amount of computations of the entire filtering process of the loop filter unit 38, the video decoding device carries out the pixel adaptive offset process or the adaptive filtering process for each largest decoding block by referring to the selection information included in the filter parameters variable-length-decoded by the variable length decoding unit 31 and indicating whether or not to carry out the pixel adaptive offset process or the adaptive filtering process for each largest decoding block.

Further, although the example of decoding the information about the class classifying method selection for the pixel adaptive offset process on each largest decoding block, and the information about the class selection for the adaptive filtering process, and carryings out the loop filtering process is explained above, in a case in which the video encoding device is constructed in such a way as to encode the block size, the information about the class classifying method selection for the pixel adaptive offset process on each block having the block size, and the information about the class selection for the adaptive filtering process, the video decoding device variable-length-decodes the above-mentioned block size, the information about the class classifying method selection for the pixel adaptive offset process on each block having the block size, and the information about the class selection for the adaptive filtering process by using the variable length decoding unit 31, and the loop filter unit 38 carries out the loop filtering process on each block having the above-mentioned block size on the basis of these parameters.

In a case in which the information indicating whether or not to carry out the filtering process on each of decoding blocks into which each largest decoding block is partitioned is encoded into the slice header, the variable length decoding unit 31 decodes the above-mentioned information, and the filtering process in step ST223 is carried out only on decoding blocks each having the information indicating that the filtering process is carried out. The decoded image on which the filtering process is carried out by this loop filter unit 38 is provided as a reference image for motion-compensated prediction, and is determined as a reproduced image.

As can be seen from the above description, in accordance with this Embodiment 1, the loop filter unit 11 of the video encoding device is constructed in such a way as to carry out a classification of a local decoded image generated by the adding unit 9 into one class for each coding block having the largest size determined by the encoding controlling unit 2, design a filter that compensates for a distortion piggybacked for each local decoded image belonging to each class, and carry out the filtering process on the above-mentioned local decoded image by using the filter, and the variable length encoding unit 13 is constructed in such a way as to encode, as filter parameters, the filter designed by the loop filter unit 11 and used for the local decoded image belonging to each class, and the class number of each largest coding block. Therefore, because the user is enabled to cause the video encoding device to carry out a class classification with an arbitrary number of classes on each block having a predetermined block size according to an arbitrary method and carry out the filtering process on each region belonging to each class, there is provided an advantage of being able to carry out the class classification according to the image to be encoded, and improve the accuracy of improvement of image quality.

According to this Embodiment 1, because the video decoding device is constructed in such a way as to carry out the filtering process by using a filter belonging to each class by referring to the filter parameters variable-length-decoded by the variable length decoding unit 31 thereof, there is provided an advantage of being able to improve the accuracy of improvement of the image quality by causing the video encoding device to determine an optimal class classification and carry out the encoding.

While the invention has been described in its preferred embodiment, it is to be understood that various changes can be made in an arbitrary component according to the embodiment, and an arbitrary component according to the embodiment can be omitted within the scope of the invention.

INDUSTRIAL APPLICABILITY

The video encoding device and the video encoding method in accordance with the present invention are suitable for a video encoding device that needs to encode a video image with a high degree of efficiency, and the video encoding device and the video encoding method in accordance with the present invention are suitable for a video decoding device that needs to decode a video image which is encoded with a high degree of efficiency.

EXPLANATIONS OF REFERENCE NUMERALS

1 block partitioning unit (block partitioner), 2 encoding controlling unit (encoding controller), 3 select switch, 4 intra prediction unit (intra predictor), 5 motion-compensated prediction unit (motion-compensated predictor), 6 subtracting unit (difference image generator), 7 transformation/quantization unit (image compressor), 8 inverse quantization/inverse transformation unit (local decoded image generator), 9 adding unit (local decoded image generator), 10 memory for intra prediction (intra predictor), 11 loop filter unit (filter), 12 motion-compensated prediction frame memory (motion-compensated predictor), 13 variable length encoding unit (variable length encoder), 31 variable length decoding unit (variable length decoder), 32 inverse quantization/inverse transformation unit (difference image generator), 33 select switch, 34 intra prediction unit (intra predictor), 35 motion compensation unit (motion-compensated predictor), 36 adding unit (decoded image generator), 37 memory for intra prediction (intra predictor), 38 loop filter unit (filter), 39 motion-compensated prediction frame memory (motion-compensated predictor), 101 block partitioning unit, 102 predicting unit, 103 compressing unit, 104 local decoding unit, 105 adder, 106 loop filter, 107 memory, 108 variable length encoding unit.

**Claims**

**1.** A video decoding device comprising:

a variable length decoder that variable-length-decodes compressed data associated with each of coding blocks hierarchically partitioned from encoded data multiplexed into a bitstream and also variable-length-decodes, as filter parameters, an index indicating a class classifying method for each coding block having a largest size and an offset of each class for each coding block having the largest size from said encoded data;
a predictor that carries out a prediction process on said coding block to generate a prediction image;
a difference image generator that generates a pre-compressed difference image from the compressed data associated with the coding block variable-length-decoded by said variable length decoder;
a decoded image generator that adds the difference image generated by said difference image generator and the prediction image generated by said predictor to generate a decoded image; and
a filter that carries out a filtering process on the decoded image generated by said decoded image generator and outputs the decoded image filtering-processed thereby as a reproduced image, wherein
said filter carries out a pixel adaptive offset process of performing a class classification of each pixel in the decoded image generated by said decoded image generator into one class for each coding block having the largest size by using said class classifying method, and adding the offset of each
class to a pixel value of each pixel belonging to said class.

2. The video decoding device according to claim 1, wherein the variable length decoder variable-length-decodes, as filter parameters, the index indicating the class classifying method for each coding block having the largest size, the offset of each class for each coding block having the largest size, a filter used for a local decoded image belonging to each class, and class classification information about each coding block having the largest size from the encoded data multiplexed into the bitstream, and the filter is comprised of the pixel adaptive offset process of performing the class classification of each pixel in the decoded image generated by the decoded image generator into one class for each coding block having the largest size by using said class classifying method, and adding the offset of each class to a pixel value of each pixel belonging to said class, and an adaptive filtering process of carrying out the filtering process on said decoded image by using said filter for each class.

3. The video decoding device according to claim 1, wherein said video decoding device includes: the variable length decoder that variable-length-decodes the compressed data and a coding mode associated with each of the coding blocks hierarchically partitioned from the encoded data multiplexed into the bitstream and also variable-length-decodes, as filter parameters, the index indicating the class classifying method for each coding block having the largest size and the offset of each class for each coding block having the largest size from said encoded data; and the predictor that carries out the prediction process according to the coding mode associated with the coding block variable-length-decoded by said variable length decoder to generate the prediction image.

4. The video decoding device according to claim 3, wherein said video decoding device includes an intra predictor that, when the coding mode associated with the coding block variable-length-decoded by the variable length decoder is an intra coding mode, carries out an intra-frame prediction process corresponding to said intra coding mode on each prediction block which is a unit for prediction process at a time of carrying out the prediction process on said coding block to generate a prediction image, and the decoded image generator adds the difference image generated by the difference image generator and the prediction image generated by said intra predictor to generate the decoded image.

5. The video decoding device according to claim 4, wherein said video decoding device includes a motion-compensated predictor that, when the coding mode associated with the coding block variable-length-decoded by the variable length decoder is an inter coding mode, carries out a motion-compensated prediction process on each prediction block, which is a unit for prediction process at a time of carrying out the prediction process on the coding block, by using a reference image to generate a prediction image, and the decoded image generator adds the difference image generated by the difference image generator and the prediction image generated by the intra predictor or said motion-compensated predictor to generate the decoded image and the filter carries out the filtering process on the decoded image acquired by said decoded image generator and outputs the decoded image filtering-processed thereby to said motion-compensated predictor as a reference image.

6. The video decoding device according to claim 5, wherein the variable length decoder variable-length-decodes block partitioning information from the encoded data multiplexed into the bitstream, and variable-length-decodes compressed data, a coding mode, an intra prediction parameter or an inter prediction parameter, a quantization parameter, and a transformation block size which are associated with each coding block which is driven from said block partitioning information, and the difference image generator inverse-quantizes the compressed data associated with the coding block variable-length-decoded by said variable length decoder by using the quantization parameter associated with said coding block and carries out an inverse transformation process on the compressed data inverse-quantized thereby for each block having said transformation block size to generate the pre-compressed difference image.

7. A video encoding device comprising:

an encoding controller that determines a largest size of a coding block which is a unit to be processed at a time when an encoding process is carried out;

a block partitioner that partitions an inputted image into coding blocks each having the largest size determined by said encoding controller, and also partitions each of said coding blocks hierarchically;

a motion-compensated predictor that carries out a motion-compensated prediction process on each prediction block which is a unit for prediction process at a time of carrying out the prediction process on said coding block by using a reference image to generate a prediction image;

a local decoded image generator that decodes compressed data about a difference image between the coding block partitioned by said block partitioner and the prediction image generated by said motion-compensated predictor, and that adds the difference image decoded and the prediction image generated by said motion-compensated predictor to generate a local decoded image;

a filter that carries out a filtering process on the local decoded image generated by said local decoded image generator, and outputs the local decoded image filtering-processed thereby to said motion-compensated predictor as said reference image; and

a variable length encoder that variable-length-encodes said compressed data and filter parameters which are used when the filtering process is carried out by said filter, and that generates a bitstream into which encoded data of said compressed data and encoded data of said filter parameters are multiplexed, wherein said filter carries out a pixel adaptive offset process of selecting a class classifying method for each coding block having the largest size determined by said encoding controller, performing a class classification of each pixel of a local decoded image in the coding block having the largest size into one class by using said class classifying method, calculating an offset of each class, and adding the offset to the pixel value of each pixel belonging to said class, and said variable length encoder encodes, as filter parameters, an index indicating the class classifying method which is selected for each coding block having the largest size by said filter and the offset of each class calculated for each coding block having the largest size.

8. The video encoding device according to claim 7, wherein said filter is comprised of the pixel adaptive offset process of selecting a class classifying method for each coding block having the largest size, performing a class classification of each pixel of the local decoded image in the coding block having the largest size into one class by using said class classifying method, calculating the offset of each class, and adding the offset to the pixel value of each pixel belonging to said class, and an adaptive filtering process of performing a class classification of said local decoded image into one class for each coding block having the largest size, designing a filter used for each class, and performing a filtering process on said local decoded image by using said filter, and wherein said variable length encoder encodes, as filter parameters, the index indicating the class classifying method which is selected for each coding block having the largest size by said filter, the offset of each class calculated for each coding block having the largest size, the filter designed by said filter and used for the local decoded image belonging to each class, and class classification information about each coding block having the largest size.

9. The video encoding device according to claim 7, wherein said video encoding device includes: the encoding controller that determines the largest size of a coding block which is a unit to be processed at a time when the encoding process is carried out, and also determines an upper limit on a number of hierarchical layers when a coding block having the largest size is hierarchically partitioned, and that selects a coding mode corresponding to each of coding blocks partitioned hierarchically from one or more available coding modes; the block partitioner that partitions the inputted image into coding blocks each having the largest size determined by said encoding controller, and also partitions each of said coding blocks hierarchically until the number of hierarchical layers reaches the upper limit on the number of hierarchical layers which is determined by said encoding controller; the motion-compensated predictor that, when an inter coding mode is selected by said encoding controller as the coding mode corresponding to the coding block partitioned by said block partitioner, carries out the motion-compensated prediction process on each prediction block which is a unit for prediction process at a time of carrying out the prediction process on said coding block by using the reference image to generate the prediction image; a difference image generator that generates a difference image between the coding block partitioned by said block partitioner and the prediction image generated by said motion-compensated predictor; an image compressor that compresses the difference image generated by said difference image generating unit and outputs compressed data about said difference image; the local decoded image generator that decodes the difference image compressed by said image compressor and adds the difference image decoded and the prediction image generated by said motion-compensated predictor to generate the local decoded image; the filter that carries out the filtering process on the local decoded image generated by said local decoded image generator, and outputs the local decoded image filtering-processed thereby to said motion-compensated predictor as said reference image; and the variable length encoder that variable-length-encodes the compressed data outputted from said image compressor, the coding mode selected by said encoding controller, and the filter parameters used when the filtering process is carried out by said filter, and that generates the bitstream into which the encoded data of said compressed data, encoded data of said coding mode, and the encoded data of said filter parameters are multiplexed.

10. The video encoding device according to claim 9, wherein said video encoding device includes an intra predictor that, when an intra coding mode is selected by the encoding controller as the coding mode corresponding to the coding block partitioned by said block partitioner, carries out an intra-frame prediction process corresponding to said intra coding mode on each prediction block which is a unit for prediction process at a time of carrying out the prediction process on the coding block to generate a prediction image, and wherein the difference image generator generates a difference image between the coding block partitioned by said block partitioner and the prediction image generated by said intra predictor or the motion-compensated predictor, and the local decoded image generator adds the difference image decoded and the prediction image generated by said intra predictor or said motion-compensated predictor to generate the local decoded image.

11. The video encoding device according to claim 10, wherein the encoding controller determines a quantization parameter and a transformation block partitioning state, which are used when the difference image is compressed, for each coding block, and also determines an intra prediction parameter or an inter prediction parameter, which is used when the prediction process is carried out, for each prediction block of said coding block, the image compressor carries out the transformation process on the difference image generated by the difference image generator for each transformation block determined by said encoding controller and also quantizes transform coefficients of said difference image by using the quantization parameter determined by said encoding controller and outputs the transform coefficients quantized thereby as the compressed data about said difference image, and, when variable-length-encoding the compressed data outputted from said image compressor, the coding mode selected by said encoding controller, and the filter parameters used when the filtering process is carried out by the filter, the variable length encoder variable-length-encodes the intra prediction parameter or the inter prediction parameter determined by said encoding controller, and the quantization parameter and transformation block partitioning information to generate the bitstream into which the encoded data of said compressed data, the encoded data of said coding mode, the encoded data of said filter parameters, encoded data of said intra prediction parameter or said inter prediction parameter, encoded data of said quantization parameter, and encoded data of said transformation block partitioning information are multiplexed.

12. A video decoding method comprising:

a variable length decoding processing step of a variable length decoder variable-length-decoding block partitioning information from encoded data multiplexed into a bitstream and also variable-length-decoding compressed data associated with each of coding blocks hierarchically partitioned from said encoded data by referring to a partitioning state of each of coding blocks indicated by said block partitioning information, and further variable-length-decoding, as filter parameters, an index indicating a class classifying method for each coding block unit having a largest size and an offset of each class for each coding block having the largest size from said encoded data;
a prediction processing step of a predictor carrying out a prediction process on said coding block to generate a prediction image;
a difference image generation processing step of a difference image generator generating a pre-compressed difference image from the compressed data associated with the coding block variable-length-decoded in said variable length decoding processing step;
a decoded image generation processing step of a decoded image generator adding the difference image generated in said difference image generation processing step and the prediction image generated in said prediction processing step to generate a decoded image; and
a filtering processing step of a filter carrying out a filtering process on the decoded image generated in said decoded image generation processing step and outputting the decoded image filtering-processed thereby as a reproduced image,
wherein in said filtering processing step, a pixel adaptive offset process of performing a class classification of each pixel in the decoded image generated in said decoded image generation processing step for each coding block having the largest size into one class by using said class classifying method, and adding the offset of each class to a pixel value of each pixel belonging to said class is carried out.

**13.** A video encoding method comprising:

an encoding control processing step of an encoding controller determining a largest size of a coding block which is a unit to be processed at a time when an encoding process is carried out;

a block partitioning processing step of a block partitioner partitioning an inputted image into coding blocks each having the largest size determined in said encoding control processing step, and also partitioning each of said coding blocks hierarchically;

a motion-compensated prediction processing step of a motion-compensated predictor carrying out a motion-compensated prediction process on each prediction block which is a unit for prediction process at a time of carrying out the prediction process on said coding block by using a reference image to generate a prediction image;

a local decoded image generation processing step of a local decoded image generator decoding compressed data about a difference image between the coding block partitioned in said block partitioning processing step and the prediction image generated in said motion-compensated prediction processing step, and adding the difference image decoded and the prediction image generated in said motion-compensated prediction processing step to generate a local decoded image;

a filtering processing step of a filter carrying out a filtering process on the local decoded image generated in said local decoded image generation processing step, and outputting the local decoded image filtering-processed thereby to said motion-compensated predictor as said reference image; and

a variable length encoding processing step of a variable length encoder variable-length-encoding said compressed data and filter parameters which are used when the filtering process is carried out in said filtering processing step, and generating a bitstream into which encoded data of said compressed data and encoded data of said filter parameters are multiplexed,

wherein in said filtering processing step, a pixel adaptive offset process of selecting a class classifying method for each coding block having the largest size determined in said encoding control processing step, performing a class classification of each pixel of a local decoded image in the coding block having the largest size into one class by using said class classifying method, calculating an offset of each class, and adding the offset to a pixel value of each pixel belonging to said class is carried out, and, in said variable length encoding processing step, an index indicating the class classifying method which is selected for each coding block having the largest size in said filtering processing step and the offset of each class calculated for each coding block having the largest size are encoded as filter parameters.

**Amended claims under Art. 19.1 PCT**

**1.** (amended) An image decoding device comprising:

a variable length decoder that variable-length-decodes compressed data associated with each of coding blocks hierarchically partitioned from encoded data multiplexed into a bitstream and also variable-length-decodes filter parameters for each coding block having a largest size from said encoded data;

a predictor that carries out a prediction process on said coding block to generate a prediction image;

a difference image generator that generates a pre-compressed difference image from the compressed data associated with the coding block variable-length-decoded by said variable length decoder;

a decoded image generator that adds the difference image generated by said difference image generator and the prediction image generated by said predictor to generate a decoded image; and

a filter that carries out a filtering process using said filter parameters on the decoded image generated by said decoded image generator and outputs the decoded image filtering-processed thereby as a reproduced image, wherein

said variable length decoder variable-length-decodes a flag disposed for each coding block having said largest size and indicating whether filter parameters for a coding block to be decoded having said largest size are same as those for another coding block having said largest size and adjacent to top or left of the coding block having said largest size, and, when the flag indicates that the parameters are the same as those for the other coding block, sets the corresponding parameters as the filter parameters for the coding block to be decoded having said largest size.

**2.** (amended) The image decoding device according to claim 1, wherein said variable length decoder variable-length-decodes the filter parameters for each coding block having said largest size, an index indicating a class classifying method, and an offset of each class, and said filter carries out a pixel adaptive offset process of performing a class classification of each pixel in the decoded image generated by said decoded image generator into one class for each coding block having the largest size by using the class classifying method specified by the index indicating said class classifying method, and adding the offset of said each class to a pixel value of each pixel belonging to the corresponding class.

**3.** (amended) The image decoding device according to claim 2, wherein said variable length decoder variable-length-decodes a coding mode associated with each of the coding blocks hierarchically partitioned from the encoded data multiplexed into the bitstream, and wherein said video decoding device includes an intra predictor that, when said coding mode is an intra coding mode, carries out an intra-frame prediction process corresponding to said intra coding mode on each prediction block which is a unit for prediction process at a time of carrying out the prediction process on said coding block to generate a prediction image, and the said decoded image generator adds the difference image generated by said difference image generator and the prediction image generated by said intra predictor to generate the decoded image.

**4.** (amended) The image decoding device according to claim 3, wherein said video decoding device includes a motion-compensated predictor that, when the coding mode associated with the coding block variable-length-decoded by said variable length decoder is an inter coding mode, carries out a motion-compensated prediction process on each prediction block, which is a unit for prediction process at a time of carrying out the prediction process on the coding block, by using a reference image to generate a prediction image, and said decoded image generator adds the difference image generated by said difference image generator and the prediction image generated by said intra predictor or said motion-compensated predictor to generate the decoded image and said filter carries out the filtering process on the decoded image acquired by said decoded image generator and outputs the decoded image filtering-processed thereby to said motion-compensated predictor as a reference image.

**5.** (amended) The image decoding device according to claim 4, wherein said variable length decoder variable-length-decodes block partitioning information from the encoded data multiplexed into the bitstream, and variable-length-decodes compressed data, a coding mode, a prediction parameter showing an intra prediction parameter or an inter prediction parameter, a quantization parameter, and a transformation block size which are associated with each coding block which is driven from said block partitioning information, and said difference image generator inverse-quantizes the compressed data associated with the coding block variable-length-decoded by said variable length decoder by using the quantization parameter associated with said coding block and carries out an inverse transformation process on the compressed data inverse-quantized thereby for each block having said transformation block size to generate the pre-compressed difference image.

**6.** (amended) An image encoding device comprising:

a coding parameter determinator that determines a largest size of a coding block which is a unit to be processed at a time when an encoding process is carried out;
a block partitioner that partitions an inputted image into coding blocks each having the largest size determined by said coding parameter determinator, and also partitions each of said coding blocks hierarchically;
a predictor that carries out a prediction process on said coding block to generate a prediction image;
a difference image generator that generates a difference image between the coding block partitioned by said block partitioner and the prediction image generated by said predictor;
an image compressor that compresses the difference image generated by said difference image generator and outputs compressed data about said difference image;
a local decoded image generator that decodes the compressed data generated by said image compressor and adds the difference image decoded and the prediction image generated by said predictor to generate a local decoded image;
a filter that carries out a filtering process on the local decoded image generated by said local decoded image generator; and
a variable length encoder that variable-length-encodes said compressed data and filter parameters for each coding block having the largest size, and that generates a bitstream into which encoded data of said compressed data and encoded data of said filter parameters are multiplexed, wherein
said variable length encoder variable-length-encodes a flag disposed for each coding block having said largest size and indicating whether filter parameters for a coding block to be encoded having said largest size are same as those for another coding block having said largest size and adjacent to top or left of the coding block having said largest size.

**7.** (amended) The image encoding device according to claim 6, wherein said filter carries out a pixel adaptive offset process of determining a class classifying method for each coding block having the largest size determined by said coding parameter determinator, performing a class classification of each pixel of the local decoded image in the coding block having the largest size into one class by using said class classifying method, and adding an offset of each class to a pixel value of each pixel belonging to said class, and wherein said variable length encoder encodes, as filter parameters, the index indicating the class classifying method which is determined for each coding block having the largest size by said filter and the offset of each class for each coding block having the largest size.

**8.** (amended) The image encoding device according to claim 7, wherein said video encoding device includes an intra predictor that, when an intra coding mode is assigned by said coding parameter determinator as the coding mode corresponding to the coding block partitioned by said block partitioner, carries out an intra-frame prediction process corresponding to said intra coding mode on each prediction block which is a unit for prediction process at a time of carrying out the prediction process on said coding block to generate a prediction image, and wherein said difference image generator generates a difference image between the coding block partitioned by said block partitioner and the prediction image generated by said intra predictor, and said local decoded image generator adds the difference image decoded and the prediction image generated by said intra predictor to generate the local decoded image.

**9.** (amended) The image encoding device according to claim 8, wherein said image encoding device includes a motion-compensated predictor that, when an inter coding mode is determined by said coding parameter determinator as the coding mode corresponding to the coding block partitioned by said block partitioner, carries out a motion-compensated prediction process on each prediction block which is a unit for prediction process at a time of carrying out the prediction process on said coding block by using a reference image to generate a prediction image, and wherein said difference image generator generates a difference image between the coding block partitioned by said block partitioner and the prediction image generated by said motion-compensated predictor, said local decoded image generator adds the difference image decoded and the prediction image generated by said motion-compensated predictor to generate the local decoded image, and said filter that carries out the filtering process on the local decoded image generated by said local decoded image generator, and outputs the local decoded image filtering-processed thereby to said motion-compensated predictor as a reference image.

**10.** (amended) The image encoding device according to claim 9, wherein said coding parameter determinator determines a quantization parameter and a transformation block partitioning state, which are used when the difference image is compressed, for each coding block, and also determines an intra prediction parameter or an inter prediction parameter, which is used when the prediction process is carried out, for each prediction block of said coding block, said image compressor carries out the transformation process on the difference image generated by said difference image generator for each transformation block determined by said coding parameter determinator and also quantizes transform coefficients on which said transformation process is carried out by using the quantization parameter determined by said coding parameter determinator and outputs the transform coefficients quantized thereby as the compressed data about said difference image, and said variable length encoder variable-length-encodes the compressed data outputted from said image compressor, the coding mode selected by said coding parameter determinator, a prediction parameter showing the intra prediction parameter or the inter prediction parameter, the quantization parameter and transformation block partitioning information, and the filter parameters used when the filtering process is carried out by said filter to generate the bitstream into which the encoded data of said compressed data, the encoded data of said coding mode, encoded data of said prediction parameter, encoded data of said quantization parameter, encoded data of said transformation block partitioning information, and the encoded data of said filter parameters are multiplexed.

**11.** (amended) An image decoding method comprising:

a variable length decoding processing step of a variable length decoder variable-length-decoding block partitioning information from encoded data multiplexed into a bitstream and also variable-length-decoding filter parameters for each coding block unit having a largest size from said encoded data;
a prediction processing step of a predictor carrying out a prediction process on said coding block to generate a prediction image;
a difference image generation processing step of a difference image generator generating a pre-compressed difference image from the compressed data associated with the coding block variable-length-decoded in said variable length decoding processing step;

a decoded image generation processing step of a decoded image generator adding the difference image generated in said difference image generation processing step and the prediction image generated in said prediction processing step to generate a decoded image; and

a filtering processing step of a filter carrying out a filtering process on the decoded image generated in said decoded image generation processing step and outputting the decoded image filtering-processed thereby as a reproduced image,

wherein in said variable length decoding processing step, a flag disposed for each coding block having said largest size and indicating whether filter parameters for a coding block to be decoded having said largest size are same as those for another coding block having said largest size and adjacent to top or left of the coding block having said largest size is variable-length-decoded, and, when the flag indicates that the parameters are the same as those for the other coding block, the corresponding parameters are set as the filter parameters for the coding block to be decoded having said largest size.

**12.** (amended) An image encoding method comprising:

a coding parameter determination processing step of a coding parameter determinator determining a largest size of a coding block which is a unit to be processed at a time when an encoding process is carried out;

a block partitioning processing step of a block partitioner partitioning an inputted image into coding blocks each having the largest size determined in said coding parameter determination processing step, and also partitioning each of said coding blocks hierarchically;

a prediction processing step of a prediction process to generate a prediction image;

a difference image generation processing step of a difference image generator generating a difference image between the coding block partitioned in said block partitioning processing step and the prediction image generated in said prediction processing step;

an image compression processing step of an image compressor compressing the difference image generated in said difference image generation processing step and outputting compressed data about said difference image;

a local decoded image generation processing step of a local decoded image generator decoding the coding block partitioned in said block partitioning processing step and the compressed data generated in said image compression processing step, and adding the difference image decoded and the prediction image generated in said prediction processing step to generate a local decoded image;

a filtering processing step of a filter carrying out a filtering process on the local decoded image generated in said local decoded image generation processing step; and

a variable length encoding processing step of a variable length encoder variable-length-encoding said compressed data and filter parameters for each coding block having the largest size which are used when the filtering process is carried out in said filtering processing step, and generating a bitstream into which encoded data of said compressed data and encoded data of said filter parameters are multiplexed,

wherein in said variable length encoding processing step, a flag disposed for each coding block having said largest size and indicating whether filter parameters for a coding block to be encoded having said largest size are same as those for another coding block having said largest size and adjacent to top or left of the coding block having said largest size are variable-length-encoded.

**13.** (added) An image decoding device comprising:

a variable length decoder that variable-length-decodes compressed data associated with each of coding blocks hierarchically partitioned from encoded data multiplexed into a bitstream and also variable-length-decodes, as filter parameters, an index indicating a class classifying method for each coding block having a largest size and an offset of each class for each coding block having the largest size from said encoded data;

a predictor that carries out a prediction process on said coding block to generate a prediction image;

a difference image generator that generates a pre-compressed difference image from the compressed data associated with the coding block variable-length-decoded by said variable length decoder;

a decoded image generator that adds the difference image generated by said difference image generator and the prediction image generated by said predictor to generate a decoded image; and

a filter that carries out a filtering process using said filter parameters on the decoded image generated by said decoded image generator and outputs the decoded image filtering-processed thereby as a reproduced image, wherein

said filter carries out a pixel adaptive offset process of performing a class classification of each pixel in the decoded image generated by said decoded image generator into one class for each coding block having the largest size by using the class classifying method specified by the index indicating said class classifying method, and adding the offset of each class to a pixel value of each pixel belonging to said class.

# FIG.1

EP 2 806 639 A1

# FIG.2

START

ST1
Determine Largest Coding Block Size And Upper Limit On Number Of Hierarchical Layers Partitioned

ST2
Determine Coding Mode

ST3
INTRA? — NO

YES

ST12
To Next Coding Block

ST4
Intra Prediction Process

ST5
Inter Prediction Process

ST6
Generate Prediction Difference Signal

ST7
Transformation And Quantization Process

ST8
Inverse Quantization And Inverse Transformation Process

ST11
Are All Coding Target Blocks Processed? — NO

ST9
Decoding Adding Process

YES

ST10
Loop Filter Process

ST13
Variable Length Encoding Process

END

# FIG.3

Prediction Difference Coding Parameters

31

Bitstream → Variable Length Decoding Unit

Compressed Data →

Inverse Quantization /Inverse Transformation Unit  32

Decoding Prediction Difference Signal

36  Decoded Image

Coding Mode

Intra Prediction Parameter → Intra-Prediction Unit  34

Intra Prediction Image

Memory For Intra Prediction  37

Intra Prediction Parameter or Inter Prediction Parameter Motion Vector

33

Inter Prediction Parameter Motion Vector

Motion Compensation Unit  35

Inter Prediction Image

Loop Filter Unit  38

Reproduced Image

Motion-Compensated Prediction Frame Memory

39

EP 2 806 639 A1

# FIG.4

```
                    ┌─────────────┐
                    │    START    │
                    └──────┬──────┘
                           │        ╭ST21
                    ┌──────▼──────────────────────┐
                    │ Variable Length Decoding Process │
                    └──────┬──────────────────────┘
                           │        ╭ST22
                    ┌──────▼──────────────────────┐
                    │  Determine Largest Coding     │
                    │  Block Size And Upper Limit   │
                    │  On Number Of Hierarchical    │
                    │  Layers Partitioned           │
                    └──────┬──────────────────────┘
                           │        ╭ST23
                    ┌──────▼──────────────────────┐
                    │ Specify Target Block To Be Decoded │
                    └──────┬──────────────────────┘
                           │        ╭ST24
                    ┌──────▼──────────────────────┐
                    │ Variable Length Decoding Process  │
                    │ (Coding Mode, Prediction Parameter,│
                    │  Transform Coefficient Data)      │
                    └──────┬──────────────────────┘
```

ST25 — INTRA? — NO

ST26 YES — Intra Prediction Process

ST27 — Inter Prediction Process

ST28 — Inverse Quantization And Inverse Transformation Process

ST29 — Decoding Adding Process

ST30 — Are All Target Blocks To Be Decoded Processed? — NO / YES

ST31 — Loop Filter Process

END

# FIG.5

# FIG.6

(a)

(b)

# FIG.7

| Intra Prediction Mode Index | Intra Prediction Mode |
|---|---|
| 0 | Planar Prediction |
| 1 | Vertical Prediction |
| 2 | Horizontal Prediction |
| 3 | Average (DC) Prediction |
| 4 ~ $N_I$-1 | Diagonal Prediction |

$N_I$:Intra Prediction Mode Number

# FIG.8

In Case of $l_i^n = m_i^n = 4$

Reference Pixel

Prediction Target Pixel $(x, y)$

$m_i^n$  Pixel Used For Prediction (Already-Encoded Pixel)

Prediction Direction Vector $\upsilon_p = (dx, dy)$

$l_i^n$

# FIG.9

Pixel

Prediction Block

# FIG.10

EP 2 806 639 A1

Loop Filter Unit

Local Decoded Image →

| Deblocking Filter Process | → | Pixel Adaptive Offset Process | → | Adaptive Filter Process |

~11

Local Decoded Image Filtering-Processed →

# FIG.11

| | | | | |
|---|---|---|---|---|
| 0 | 1 | 1 | 2 | ... |
| 1 | 7 | 0 | 8 | ... |
| 12 | 7 | 8 | 8 | ... |
| ⋮ | ⋮ | ⋮ | ⋮ | |

Class Number
(Filter Number)

Largest Coding Block

# FIG.12

EP 2 806 639 A1

Loop Filter Unit ~38

Decoded Image → | Deblocking Filter Process | → | Pixel Adaptive Offset Process | → | Adaptive Filter Process | → Decoded Image Filtering-Processed

# FIG.13

```
                    ┌─────────┐
                    │  START  │
                    └─────────┘
                         │
                         ▼
                  ╱─────────────╲        ⌐ST101
                 ╱   Last Block?  ╲──────────── YES ──┐
                 ╲               ╱                    │
                  ╲─────────────╱                     │
                         │ NO                         │
                         ▼                            │
        ┌──────────────────────────────┐             │
        │ Calculate Cost C₀ In Case Of Not │  ~ST102   │
        │ Carrying Out Filtering Process On│           │
        │ Pixel Within Current Block       │           │
        └──────────────────────────────┘             │
                         │                            │
                         ▼                            │
        ┌──────────────────────────────┐             │
        │      Design New Filter        │  ~ST103      │
        └──────────────────────────────┘             │
                         │                            │
                         ▼                            │
        ┌──────────────────────────────┐             │
        │     Calculate Cost Cnew        │             │
        │ In Case Of Using New Filter    │  ~ST104      │
        │ For Each Pixel Within Current Block│          │
        └──────────────────────────────┘             │
                         │                            │
                         ▼                            │
        ┌──────────────────────────────┐             │
        │ Calculate Costs C₁,C₂,···,Cnumbl│            │
        │ In Case Of Using Filters Used For│ ~ST105     │
        │ Already-Processed Blocks For Each Pixel│      │
        │ Within Current Block           │             │
        └──────────────────────────────┘             │
                         │                            │
                         ▼                            │
        ┌──────────────────────────────┐             │
        │ Determine Process Having Smallest│           │
        │ One Of Cnew,C₀,C₁,C₂,···,Cnumbl│  ~ST106      │
        │ As Filtering Process           │             │
        │ To Be Carried Out On Current Block,│         │
        │ And Carry Out Filtering Process│             │
        └──────────────────────────────┘             │
                         │                            │
                         ▼                            │
        ┌──────────────────────────────┐             │
        │        To Next Block          │  ~ST107      │
        └──────────────────────────────┘             │
                         │                            │
                         └───────────────────────┐    │
                                                  │    │
                                                  ▼    ▼
                                            ┌─────────┐
                                            │   END   │
                                            └─────────┘
```

# FIG.14

START

Provision Of Filter Set ~ST108

ST109

Last Block? — YES

NO

Calculate Cost $C_0$ In Case Of Not Carrying Out Filtering Process On Pixel Within Current Block ~ST110

Calculate Costs $C_1, C_2, \cdots, C_{numbl}$ In Case Of Using Filters Prepared In Advance For Each Pixel Within Current Block ~ST111

Determine Process Having Smallest One Of $C_0, C_1, C_2, \cdots, C_{numbl}$ As Filtering Process To Be Carried Out On Current Block, And Carry Out Filtering Process ~ST112

To Next Block ~ST113

END

# FIG.15

0: Filter ON
1: Filter OFF

# FIG.16

Class Number
(Filter Number)

Example Of
Move-To-Front Process

Coding
Index

Filter
Number

Filter
Number

Target Largest Coding Block
To Be Encoded

# FIG.17

| 0 | 1 | 1 | 1 | ... |
|---|---|---|---|-----|
| 1 | 1 | 0 | 1 | ... |
| 1 | 1 | 0 | 0 | ... |

Largest Coding Block

0: Filter ON
1: Filter OFF

FIG.18

Encoding Order

| Sequence Level Header 1 | Picture Level Header 1 | Filter Parameter Set 1 | Picture Data 1 | Picture Level Header 2 | Filter Parameter Set 2 | Picture Data 2 | ... |

Slice 1 | Slice 2 | ... | Slice L

Slice Level Header

# FIG.19

START

ST221

Last Block? —— YES

NO

S222

Is Filtering Process
Carried Out? —— YES

NO

Refer To Filter Number Of Current Block
And Carry Out Filtering Process Using
Corresponding Filter ～ST223

To Next Block ～ST224

END

# FIG.20

Class Classifying Method

Method 1   Method 2   Method 3   Method 4

Classification Criteria In Each Class Classifying Method

| Class | Criterion |
|---|---|
| 1 | c< a && c < b |
| 2 | (c < a&& c = b) \|\| (c < b&& c = a) |
| 3 | (c > a&& c = b) \|\| (c > b&& c = a) |
| 4 | c>a && c > b |
| 0 | Other Than Classes 1 To 4 |

A, B, C: Brightness Value Of Each Pixel

# FIG.21

Parameters For Prediction Signal Creation

Target Image Signal To Be Encoded → **101** Block Partitioning Unit → Split Image Signals → **102** Predicting Unit → Prediction Error Signal → **103** Compressing Unit → Compressed Data → **108** Variable Tone Encoder → Bitstream

107 ~ Memory

Local Decoding Unit ~ 104

Prediction Error Signal

Reference Image Signal

Prediction Signal → ⊕ ~ 105

**106** Loop Filter

Local Decoded Image Signal

EP 2 806 639 A1

# FIG.22

s → | Encoding Process | (e above box) → s' → | Wiener Filter | → $\hat{s}$

# FIG.23

| Filter1<br>run =2<br>no merge-above | Filter1 | Filter1 | Filter2<br>run =1<br>no merge-above | Filter2 |
|---|---|---|---|---|
| Filter3<br>run=2<br>merge-above=0 | Filter3 | Filter3 | Filter2<br>run=1<br>merge-above=1 | Filter2 |
| Filter4<br>run=4<br>merge-above=0 | Filter4 | Filter4 | Filter4 | Filter4 |

Target Picture For Filtering Process

## INTERNATIONAL SEARCH REPORT

| International application No. |
| --- |
| PCT/JP2013/050207 |

A. CLASSIFICATION OF SUBJECT MATTER
*H04N7/32*(2006.01)i

According to International Patent Classification (IPC) or to both national classification and IPC

B. FIELDS SEARCHED

Minimum documentation searched (classification system followed by classification symbols)
H04N7/24-7/68

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | Chih-Ming Fu, et al., Sample Adaptive Offset with LCU-based Syntax, Joint Collaborative Team on Video Coding (JCT-VC) of ITU-T SG16 WP3 and ISO/IEC JTC1/SC29/WG11 6th Meeting: Torino, IT, 2011.07.15, [JCTVC-F056] | 1,3-7,9-13<br>2,8 |
| Y | A. Fuldseth, et al., Improved ALF with low latency and reduced complexity, Joint Collaborative Team on Video Coding (JCT-VC) of ITU-T SG16 WP3 and ISO/IEC JTC1/SC29/WG11 7th Meeting: Geneva, CH, 2011.11.22, [JCTVC-G499] | 2,8 |
| A | Ching-Yeh Chen, et al., Non-CE8: One-stage non-deblocking loop filtering, Joint Collaborative Team on Video Coding (JCT-VC) of ITU-T SG16 WP3 and ISO/IEC JTC1/SC29/WG11 7th Meeting: Geneva, CH, 2011.11.21, [JCTVC-G218] | 1-13 |

☐ Further documents are listed in the continuation of Box C.  ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 25 March, 2013 (25.03.13) | 02 April, 2013 (02.04.13) |

| Name and mailing address of the ISA/<br>Japanese Patent Office | Authorized officer |
| --- | --- |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008010929 A